(19)

Europäisches Patentamt
European Patent Office
Office européen des brevets

(11) **EP 4 586 671 A1**

(12) **EUROPEAN PATENT APPLICATION**
published in accordance with Art. 153(4) EPC

(43) Date of publication:
**16.07.2025 Bulletin 2025/29**

(21) Application number: **23870427.4**

(22) Date of filing: **18.09.2023**

(51) International Patent Classification (IPC):
*H04W 24/06* (2009.01)

(52) Cooperative Patent Classification (CPC):
**G06N 3/04; G06N 3/08; G06N 20/00; H04B 17/309; H04W 16/22; H04W 24/06**

(86) International application number:
**PCT/CN2023/119343**

(87) International publication number:
**WO 2024/067193 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 CN 202211203052**

(71) Applicant: **Huawei Technologies Co., Ltd.**
**Shenzhen, Guangdong 518129 (CN)**

(72) Inventors:
• **TIAN, Yang**
**Shenzhen, Guangdong 518129 (CN)**
• **CHAI, Xiaomeng**
**Shenzhen, Guangdong 518129 (CN)**
• **SUN, Yan**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD FOR ACQUIRING TRAINING DATA IN AI MODEL TRAINING AND COMMUNICATION APPARATUS**

(57)     This application provides a method for obtaining training data in AI model training, which may be applied to a scenario in which an AI model training network element (a second network element) and a training data collection network element (a first network element) are logically deployed separately. The first network element receives first information from the second network element, where the first information is for determining validity of candidate training data collected by the first network element. The first network element collects candidate training data of an AI model, and determines the validity of the candidate training data based on the first information. When it is determined that the candidate training data is valid, the first network element sends valid candidate training data to the second network element, but does not send invalid candidate training data. When the collected candidate training data does not include valid candidate training data, the first network element indicates, to the second network element, that the training data collected this time is invalid, and does not send the candidate training data collected this time to the second network element. In this way, a waste of air interface resources can be reduced.

FIG. 3

## Description

This application claims priority to Chinese Patent Application No. 202211203052.X, filed with the China National Intellectual Property Administration on September 29, 2022 and entitled "METHOD FOR OBTAINING TRAINING DATA IN AI MODEL TRAINING AND COMMUNICATION APPARATUS", which is incorporated herein by reference in its entirety.

## TECHNICAL FIELD

Embodiments of this application relate to the machine learning field, and more specifically, to a method for obtaining training data in AI model training and a communication apparatus.

## BACKGROUND

When an AI model is applied to some application scenarios of an air interface technology, AI model training and AI model training data collection may be deployed on different network elements. In this current situation, training or update of the AI model needs exchange of training data (for example, a reference signal measurement result and/or a label) between an AI model training network element and a training data collection network element.

In an existing solution, training data between an AI model training network element and a training data collection network element is usually sent periodically or continuously exchanges. However, this information exchange manner may cause a waste of air interface resources.

## SUMMARY

This application provides a method for obtaining training data in AI model training and a communication apparatus, to reduce a waste of air interface resources.

According to a first aspect, a method for obtaining training data in AI model training is provided, and the method may be applied to a training data collection network element, for example, a terminal device or an access network device. The method includes:

A first network element receives first information from a second network element, where the first information is for determining validity of candidate training data collected by the first network element, and a determining result of the validity includes valid or invalid;

the first network element collects candidate training data of an AI model; and

the first network element sends second information to the second network element based on the candidate training data and the first information, where the second information indicates the determining result of the validity.

In the technical solution of this application, the first network element is a network element that collects training data of the AI model, and the second network element is a network element that trains the AI model. When the second network element needs the first network element to collect the training data of the AI model, the second network element sends the first information to the first network element. The first information indicates the first network element to collect the training data of the AI model, and is further for determining the validity (also referred to as validity determining for short) of the candidate training data collected by the first network element. The first network element collects the candidate training data of the AI model, and determines the validity of the collected candidate training data based on the first information. Then, the first network element sends the second information to the second network element, to indicate the determining result of the validity. Based on this technical solution, after completing collection of candidate training data once, the first network element determines validity of the collected candidate training data. Only valid candidate training data is provided by the first network element as training data for the second network element to use, instead of providing collected data for the second network element without any screening. Transmission of collected invalid candidate training data can be reduced, thereby reducing a waste of air interface resources.

With reference to the first aspect, in some implementations of the first aspect, the first information is for determining a constraint that is for the validity determining. Optionally, the constraint may include one or more of the following:

a threshold of a quality indicator and a determining criterion of the quality indicator;

an amount threshold of training data that meets a quality indicator determining criterion and a determining criterion of an amount of the training data; or maximum duration of candidate training data collection corresponding to a single time of validity determining.

With reference to the first aspect, in some implementations of the first aspect, the first information indicates one or more of the following:

a threshold of a quality indicator;

a quality indicator determining criterion;

an amount threshold of training data that meets a quality indicator determining criterion;

a determining criterion of an amount of training data that meets a quality indicator determining criterion; or

maximum duration of candidate training data collection corresponding to a single time of validity determining.

It may be understood that a part that is in the foregoing information and that is not indicated by the first information may be predefined in a protocol.

Optionally, that the first information indicates a part of the foregoing information may include explicitly indicating one or more pieces of information in the part of the foregoing information, or implicitly indicating one or more pieces of information in the part of the foregoing information. The explicit indication may include: The first information includes one or more pieces of information in the part of the foregoing information explicitly indicated by the first information. The implicit indication may include: The first information includes other information corresponding to one or more pieces of information in the part of the foregoing information implicitly indicated by the first information. Optionally, the other information may include an index that has a correspondence with the one or more pieces of information in the part of the foregoing information implicitly indicated by the other information. The other information may include one or more pieces of information, and a plurality of pieces of information respectively indicate parts of all pieces of information in the implicitly indicated part of the foregoing information.

Optionally, the foregoing correspondence may be predefined in a protocol, or may be prestored or pre-configured. For the pre-configuration, a correspondence between a plurality of indexes and a plurality of values of a combination of one or more items in the foregoing information may be configured by using radio resource control (radio resource control, RRC) signaling.

Optionally, the first information may be carried in control information, for example, downlink control information (downlink control information, DCI).

Optionally, the foregoing quality indicator may include one or more quality indicators, and each of the quality indicators has a corresponding threshold and a corresponding determining criterion. For example, the quality indicator may include one or more of a quality indicator of a reference signal measurement result or a quality indicator of a label. The label is used as a comparison truth value for AI model training. For example, the label may include one or more of location information, a beam pattern (pattern), a channel measurement result, and the like.

Optionally, the threshold of the quality indicator may include the foregoing amount threshold of training data that meets a quality indicator determining criterion, and the quality indicator determining criterion may include the determining criterion of an amount of training data that meets a quality indicator determining criterion.

In this application, the first information may be for determining the constraint, and may be specifically implemented in a plurality of manners. The following uses several examples for description.

In an example, the first information indicates a threshold of one or more quality indicators, and a determining criterion of the one or more quality indicators is predefined in a protocol. For example, the quality indicator includes a signal to interference plus noise ratio (signal to interference plus noise ratio, SINR) of training data and an amount of the training data. A determining criterion of the SINR is that the SINR is greater than or equal to a threshold Q. A determining criterion of the amount of the training data is that the amount of the training data is greater than or equal to a threshold N. For example, the first information indicates Q and N, and both the determining criterion of the SINR and the determining criterion of the amount of the training data are predefined in a protocol.

In this example, the determining criterion of the quality indicator is predefined in a protocol, so that indication overheads can be reduced.

In another example, the first information indicates a threshold of one or more quality indicators and a determining criterion of the one or more quality indicators. For example, the quality indicator includes an SINR of training data and an amount of the training data. A determining criterion of the SINR is that the SINR is greater than or equal to a threshold Q. A determining criterion of the amount of the training data is that the amount of the training data is greater than or equal to a threshold N. For example, the first information indicates Q and N. In addition, the first information includes an information field, and the information field indicates the determining criterion of the SINR and the determining criterion of the amount of the training data. For example, if a value of the information field is 1, it indicates that "the SINR is greater than or equal to Q, and the amount of the training data is greater than or equal to N"; if the value of the information field is 0, it indicates that "the SINR is greater than Q, and the amount of the training data is greater than N".

In this example, the first information indicates the threshold of the quality indicator and the determining criterion of the quality indicator, so that the second network element can adaptively update the constraint based on a change of a requirement for training data. This is applicable to a scenario in which the constraint changes frequently, can improve adaptability of the AI model to different application scenarios, and can improve a probability of collecting training data that meets a requirement in different application scenarios.

In still another example, the first information indicates a threshold of a part of quality indicators, and a threshold of the other part of quality indicators and a determining criterion of the quality indicators are predefined in a protocol. For example, the quality indicator includes an SINR of the training data and an amount of the training data, a determining criterion of the SINR is that the SINR of the training data is greater than or equal to a threshold Q, and a determining criterion of the amount of the training data is that the amount of the training data is greater than or equal to a threshold N.

For example, the first information indicates Q, and the threshold N of the amount of the training data, the determining criterion of the SINR, and the determining criterion of the amount of the training data may be predefined in a protocol.

In this example, a threshold of a quality indicator with a long change period in an application scenario and a determining criterion of the quality indicator may be predefined in a protocol, to reduce signaling overheads. A threshold of a quality indicator that frequently changes and a determining criterion of the quality indicator are indicated by the first information, so that a requirement for required training data can be flexibly adjusted. In this example, signaling overheads and flexibility of constraint update may be both considered.

In still another example, the first information indicates a threshold of a part of quality indicators and one piece of index information, and the index information is for determining a determining criterion of the part of quality indicators, a threshold of another quality indicator in the constraint, and a determining criterion of the another quality indicator. For example, the first information indicates a threshold Q of the SINR and an index 0, where the index 0 indicates that a threshold of the amount of the training data is N, a determining criterion of the SINR is that the SINR of the training data is greater than or equal to Q, and a determining criterion of the amount of the training data is that the amount of the training data is at least N. Optionally, the index 0 is an index value in one of a plurality of application scenarios. For example, the plurality of application scenarios include but are not limited to CSI prediction, uplink positioning, downlink positioning, or beam management, and the index 0 is one of one or more indexes corresponding to a beam management scenario. Optionally, the index 0 is an index value in a specific application scenario. For example, in a plurality of indexes corresponding to an uplink positioning scenario, the index 0 is one of the plurality of indexes.

In still another example, the first information indicates one piece of index information, and the index information is for determining a threshold of one or more quality indicators and a determining criterion of the one or more quality indicators. For example, the first information indicates an index 0, where the index 0 indicates that a threshold of the SINR of the training data is Q, the threshold of the amount of the training data is N, the determining criterion of the SINR is that the SINR of the training data is greater than or equal to Q, and the determining criterion of the amount of the training data is that the amount of the training data is at least N. Optionally, the index 0 is an index value in one of a plurality of application scenarios. For example, the plurality of application scenarios include but are not limited to CSI prediction, uplink positioning, downlink positioning, or beam management, and the index 0 is one of one or more indexes corresponding to a beam management scenario. Optionally, the index 0 is an index value in a specific application scenario. For example, in a plurality of indexes corresponding to an uplink positioning scenario, the index 0 is one of the plurality of indexes.

In the last two examples, a correspondence between the index information and the threshold of the quality indicator and/or the determining criterion of the quality indicator is predefined in a protocol, and is merely used as an example. Alternatively, in another implementation, the correspondence may be, including but not limited to, pre-stored or pre-configured.

The foregoing describes an example in which the first information is for determining the constraint. This application is not limited to the foregoing example.

Optionally, with reference to the first aspect, in some implementations of the first aspect, the quality indicator indicated by the first information includes a quality indicator of a label of the AI model.

Optionally, the training data of the AI model further includes a label. In an example, in an application scenario of uplink positioning or downlink positioning, the label is location information. Optionally, the quality indicator in the constraint may further include the quality indicator of the label. For example, the quality indicator of the label may include a threshold of a distance between locations of different samples. Optionally, the quality indicator indicated by the first information further includes the quality indicator of the label of the AI model.

With reference to the first aspect, in some implementations of the first aspect, the second information includes first training data, the second information indicates that the candidate training data collected by the first network element is valid, and the first training data is valid data in the candidate training data.

In this implementation, after the first network element determines the validity of the collected candidate training data based on the first information, if determining that the current collection is valid, the first network element sends the second information to the second network element. The second information may be valid candidate training data (that is, the first training data), and invalid candidate training data is not sent, thereby reducing a waste of air interface resources.

In this application, the valid candidate training data is provided for the second network element for AI model training or update, that is, the valid candidate training data actually becomes training data. The invalid candidate training data is candidate training data that does not meet the constraint.

In addition, because the first network element does not send the invalid candidate training data to the second network element, the second network element does not receive invalid or unqualified training data, thereby avoiding pollution to an entire training dataset. In addition, adverse impact on AI model training by the second network element is also avoided, for example, problems such as inaccurate AI performance gain evaluation, overfitting of the AI model, a weak generalization capability, and poor scenario adaptability caused by AI model training performed by using invalid candidate training data are avoided.

With reference to the first aspect, in some implementations of the first aspect, the second information indicates that the candidate training data collected by the first network element is invalid.

In this implementation, after the first network element determines the validity of the collected candidate training data based on the first information, if determining that the current collection is invalid, the first network element sends the second information to the second network element. The second information only indicates that the candidate training data collected this time is invalid, and does not provide the collected candidate training data for the second network element, thereby reducing a waste of air interface resources. In addition, because the second network element does not receive invalid or unqualified candidate training data, pollution on the entire training dataset is avoided. In addition, adverse impact on AI model training by the second network element is also avoided, for example, problems such as inaccurate AI performance gain evaluation, overfitting of the AI model, a weak generalization capability, and poor scenario adaptability caused by AI model training performed by using invalid candidate training data are avoided.

With reference to the first aspect, in some implementations of the first aspect, the first information is for determining a constraint for determining the validity of the candidate training data collected by the first network element.

In this implementation, when the second network element indicates, based on the first information, the first network element to collect the training data of the AI model, the first information is further used by the first network element to determine a constraint that to-be-collected training data needs to meet, so that the first network element performs screening (that is, validity determining) after collecting the candidate training data, to provide a basis for the first network element to determine whether the collected candidate training data is valid.

With reference to the first aspect, in some implementations of the first aspect, the method further includes:

If the first network element determines that the candidate training data includes the first training data that meets the constraint, the first network element determines that the candidate training data is valid; or

if the first network element determines that the candidate training data does not include the first training data that meets the constraint, the first network element determines that the candidate training data is invalid.

In this implementation, a set of candidate training data that is in the collected candidate training data and that meets the constraint is referred to as the first training data. When there is no candidate training data that meets the constraint, it indicates that the current collection is invalid.

With reference to the first aspect, in some implementations of the first aspect, when the candidate training data collected by the first network element is invalid, the method further includes:

The first network element receives third information from the second network element, where the third information indicates the first network element to re-collect candidate training data of the AI model.

In this implementation, re-collection is performed after one collection is invalid, and validity determining may be performed on previously collected invalid candidate training data and the re-collected candidate training data together, to improve a probability of obtaining candidate training data that meets a requirement (that is, obtaining training data). In addition, because an air interface transmission configuration of a reference signal may be updated during re-collection, a possibility of obtaining high-quality candidate training data is increased, and a probability of collecting qualified training data is increased.

With reference to the first aspect, in some implementations of the first aspect, the method further includes:

The first network element determines air interface transmission configuration information, where the air interface transmission configuration information corresponds to an updated air interface transmission configuration, and the air interface transmission configuration information indicates the first network element to collect the candidate training data of the AI model based on the updated air interface transmission configuration.

Information about the updated air interface transmission configuration includes one or more of the following updates:

transmit power of a reference signal;
a quantity of antenna ports used for a reference signal;
bandwidth of a reference signal;
a frequency domain density of a reference signal; or
a period of a reference signal.

In this implementation, when training data of the AI model needs to be re-collected, an air interface transmission configuration of a reference signal related to training data collection may be updated, so that quality of the reference signal can be improved or ensured. In this way, valid candidate training data can be collected, thereby providing assurance for AI model training, for example, initial training/or training in an update process. In addition, because the update of the air interface transmission configuration of the reference signal helps collect valid candidate training data, AI model training efficiency can be further improved.

In addition, by learning a status of collecting the training data of the AI model, it may be learned whether there is a large amount of valid candidate training data for AI model training/update. To ensure reliable AI model-based air interface performance, it is necessary to maintain the AI model in a timely manner, switch to a non-AI mode, or adaptively update a configuration for collecting the training data.

With reference to the first aspect, in some implementations of the first aspect, the third information further indicates a maximum quantity k of times of determining the validity, where k is a positive integer.

In this implementation, the third information indicates the maximum quantity k of times of determining the validity, that is, the second network element indicates the maximum quantity k of times of determining the validity to the first network element only when determining that re-collection is required. This can avoid a signaling waste caused by restricting a re-collection process when a collection result is unknown. For example, the first network element may obtain valid candidate training data through one collection. In this case, re-collection does not need to be performed. In this case, the second network element does not need to indicate re-collected related information to the first network element, to reduce signaling overheads.

With reference to the first aspect, in some implementations of the first aspect, the first information further indicates a maximum quantity k of times of determining the validity, where k is a positive integer.

In this implementation, the first information indicates the maximum quantity k of times of determining the validity, that is, when the training data collection starts, the second network element indicates the maximum quantity of times of determining the validity, so that the first network element can quickly enter a re-collection process after one collection failure. This can reduce time of interaction between the first network element and the second network element, and improve training data collection efficiency.

In the foregoing two implementations, the second network element indicates, to the first network element, the maximum quantity k of times of determining the validity, so that the first network element can quickly collect candidate training data next time when candidate training data collected for the first time is invalid, and can repeatedly collect candidate training data when the maximum quantity k of times of determining the validity is not exceeded. This can reduce signaling overheads of re-collection indication and improve AI model training/update efficiency.

With reference to the first aspect, in some implementations of the first aspect, the method further includes:

The first network element collects the candidate training data of the AI model based on the updated air interface transmission configuration; and

if the maximum quantity k of times of determining the validity is reached, and the first network element determines, based on the first information, that a result of a $k^{th}$ time of validity determining is invalid, the first network element stops collecting the candidate training data of the AI model.

In this implementation, based on a constraint of the maximum quantity k of times of determining the validity, a collection process of the first network element can be prevented from entering an infinite loop, and resource occupation and a resource waste can be avoided.

With reference to the first aspect, in some implementations of the first aspect, the method further includes:

Before the maximum quantity k of times of determining the validity is exceeded, if the first network element determines, based on the first information, that a result of a $j^{th}$ time of validity determining is valid, the first network element sends fourth information to the second network element, where the fourth information includes second training data, the fourth information indicates that the result of the $j^{th}$ time of validity determining is valid, the second training data includes valid data in candidate training data for which the $j^{th}$ time of validity determining is performed, j is less than or equal to k, and j is a positive integer.

With reference to the first aspect, in some implementations of the first aspect, that the first network element collects candidate training data of an AI model includes:

The first network element measures a reference signal from the second network element, to obtain one or more measurement results, where the candidate training data of the AI model includes the one or more measurement results; or

the first network element measures a reference signal from a third network element, to obtain one or more measurement results, where the candidate training data of the AI model includes the one or more measurement results.

In this implementation, based on different application scenarios, that the first network element collects the candidate training data of the AI model may be a measurement result obtained by measuring the reference signal sent by the second network element or the reference signal sent by the third network element. Optionally, there may be one or more measurement results. For example, the first network element obtains one measurement result by measuring the reference signal once; the first network element obtains a plurality of measurement results by measuring the reference signal for a plurality of times; or the first network element obtains a plurality of measurement results by measuring the reference signal once. This is not limited. In these implementations, the candidate training data includes the one measurement result or the plurality of measurement results.

With reference to the first aspect, in some implementations of the first aspect, the first network element is a terminal device, the second network element is an access network device, and the first network element measures the reference signal from the second network element, to obtain the one or more measurement results.

Optionally, the signal from the second network element includes one or more of the following: a channel state information-reference signal (channel state information-reference signal, CSI-RS), a positioning reference signal (positioning reference signal, PRS), a synchronization signal and physical broadcast channel block (synchronizing signal and physical broadcast channel block, SSB), and/or a signal on a physical broadcast channel.

In this implementation, application of the AI model is applicable to application scenarios such as AI model-based CSI feedback or CSI prediction, and AI model-based beam management, to resolve problems such as CSI feedback or prediction and beam management, and improve air interface performance in these application scenarios.

With reference to the first aspect, in some implementations of the first aspect, the first training data further includes reference signal information corresponding to K optimal measurement results in the one or more measurement results, and K is an integer greater than or equal to 1. It should be understood that when there is one measurement result, K is equal to 1; when there are V measurement results, K is less than or equal to V, and K is greater than or equal to 1, where V is an integer greater than or equal to 2.

In this implementation, the AI model is applicable to a beam management scenario. In this case, the first training data further includes the reference signal information corresponding to the K optimal measurement results, and the information is used as a label of the AI model.

With reference to the first aspect, in some implementations of the first aspect, the first network element is an access network device, and the second network element is a positioning device;

the first network element measures a sounding reference signal from the third network element, to obtain the one or more measurement results; and
the first training data further includes location information of the third network element.

In this implementation, the AI model is applicable to an uplink positioning scenario. In this case, the first network element measures the sounding reference signal of the third network element, to obtain candidate training data, where the candidate training data includes the location information of the third network element.

When the candidate training data is valid, the first network element provides the valid candidate training data (that is, the first training data) and the corresponding location information of the third network element for the positioning device, to train or update the AI model. The location information of the third network element is used as a label of the AI model.

With reference to the first aspect, in some implementations of the first aspect, the first network element is a terminal device, and the second network element is a positioning device;

the first network element measures a positioning reference signal from the third network element, to obtain the one or more measurement results, where the third network element is an access network device; and
the first training data further includes location information of the first network element.

In this implementation, the AI model is applicable to a downlink positioning scenario. If the candidate training data collected by the first network element (for example, a location reference device) is valid, the first training data provided by the first network element for the second network element (that is, the positioning device) further includes the location information of the first network element, and the location information of the first network element is used as a label of the AI model.

According to a second aspect, a method for obtaining training data in AI model training is provided, and the method may be applied to an AI model training network element, for example, an access network device or a positioning device. The method includes:

A second network element sends first information to a first network element, where the first information is for determining validity of candidate training data that is of an AI model and that is collected by the first network element, and a determining result of the validity includes valid or invalid; and
the second network element receives second information from the first network element, where the second information indicates the determining result of the validity.

For descriptions of the first information, refer to the descriptions in the first aspect. Details are not described herein again.

With reference to the second aspect, in some implementations of the second aspect, the second information includes first training data, the second information indicates that the candidate training data collected by the first network element is valid, and the first training data is valid data in the candidate training data.

With reference to the second aspect, in some implementations of the second aspect, the second information indicates that the candidate training data collected by the first network element is invalid.

With reference to the second aspect, in some implementations of the second aspect, the first information is for determining a constraint for determining the validity of the candidate training data collected by the first network element.

With reference to the second aspect, in some implementations of the second aspect, if the candidate training data includes the first training data that meets the constraint, the candidate training data is valid; or

if the candidate training data does not include the first training data that meets the constraint, the candidate training data is invalid.

With reference to the second aspect, in some implementations of the second aspect, when the second information indicates that the candidate training data collected by the first network element is invalid, the method further includes:

The second network element sends third information to the first network element, where the third information indicates the first network element to re-collect candidate training data of the AI model.

With reference to the second aspect, in some implementations of the second aspect, the method further includes:

The second network element determines air interface transmission configuration information, where the air interface transmission configuration information corresponds to an updated air interface transmission configuration, and the air interface transmission configuration information indicates the first network element to collect the candidate training data of the AI model based on the updated air interface transmission configuration.

Information about the updated air interface transmission configuration includes one or more of the following updates:

transmit power of a reference signal;
a quantity of antenna ports used for a reference signal;
bandwidth of a reference signal;
a frequency domain density of a reference signal; or
a period of a reference signal.

With reference to the second aspect, in some implementations of the second aspect, the third information further indicates a maximum quantity k of times of determining the validity, where k is a positive integer.

With reference to the second aspect, in some implementations of the second aspect, the first information further indicates a maximum quantity k of times of determining the validity, where k is a positive integer.

With reference to the second aspect, in some implementations of the second aspect, the method further includes:

The second network element receives fourth information from the first network element, where the fourth information includes second training data, the fourth information indicates that a determining result of a $j^{th}$ time of validity determining performed by the first network element is valid, the second training data is valid data in candidate training data for which the $j^{th}$ time of validity determining is performed, j is less than or equal to k, and j is a positive integer.

With reference to the second aspect, in some implementations of the second aspect, the second network element is an access network device, the first network element is a terminal device, and the method further includes:

The second network element sends a reference signal to the first network element, where the reference signal is used by the first network element to obtain one or more measurement results corresponding to the reference signal, and the candidate training data of the AI model includes the one or more measurement results.

With reference to the second aspect, in some implementations of the second aspect, the first training data further includes a reference signal corresponding to K optimal measurement results in the one or more measurement results, and K is an integer greater than or equal to 1.

With reference to the second aspect, in some implementations of the second aspect, the second network element is a positioning device, and the first network element is an access network device. The candidate training data of the AI model includes one or more measurement results and location information of a third network element, and the one or more measurement results are obtained by the first network element by measuring a sounding reference signal sent by the third network element.

With reference to the second aspect, in some implementations of the second aspect, the second network element is a positioning device, and the first network element is a terminal device. The candidate training data of the AI model includes one or more measurement results and location information of the first network element, the one or more measurement results are based on measurement of a positioning reference signal sent by a third network element, and the third network element is an access network device. Optionally, the measurement is performed by the first network element.

With reference to the second aspect, in some implementations of the second aspect, the constraint includes one or more of the following:

a threshold of a quality indicator and a determining criterion of the quality indicator;
an amount threshold of training data that meets a quality indicator determining criterion and a determining criterion of an amount of the training data; or
maximum duration of candidate training data collection corresponding to a single time of validity determining.

With reference to the second aspect, in some implementations of the second aspect, the first information indicates one or more of the following:

a threshold of a quality indicator;
a quality indicator determining criterion;
an amount threshold of training data that meets a quality indicator determining criterion;
a determining criterion of an amount of training data that meets a quality indicator determining criterion; or
maximum duration of candidate training data collection corresponding to a single time of validity determining.

Optionally, the quality indicator in the foregoing implementation includes one or more quality indicators, for example, one or more of a quality indicator of a label of the AI model, or a quality indicator of a measurement result of the reference signal.

In some implementations of the first aspect or the second aspect, the constraint is based on an application scenario of the AI model, and the application scenario of the AI model includes one or more of the following: AI model-based CSI feedback or CSI prediction, AI model-based positioning, or AI model-based beam management.

According to a third aspect, this application provides a communication apparatus. The communication apparatus may be a terminal device, may be an apparatus, a module, a chip, or the like disposed in the terminal device, or may be an apparatus that can be used together with the terminal device. In a design, the communication apparatus may include modules that are in one-to-one correspondence with and that are configured to perform the method/operations/steps/actions described in the first aspect. The module may be a hardware circuit, may be software, or may be implemented by a hardware circuit in combination with software. In a design, the communication apparatus may include a processing module and a communication module.

According to a fourth aspect, this application provides a communication apparatus. In a design, the communication apparatus may include modules that are in one-to-one correspondence with and that are configured to perform the method/operations/steps/actions described in the second aspect. The module may be a hardware circuit, may be software, or may be implemented by a hardware circuit in combination with software. In a design, the communication apparatus may include a processing module and a communication module. In an example, the communication apparatus is an access network device or a positioning device, and the positioning device may be, for example, an LMF network element.

According to a fifth aspect, this application provides a communication apparatus. The communication apparatus includes a processor, configured to implement the method according to any one of the first aspect or the implementations of the first aspect. The processor is coupled to a memory. The memory is configured to store instructions and data. When the processor executes the instructions stored in the memory, the method described in any one of the first aspect or the implementations of the first aspect can be implemented. Optionally, the communication apparatus may further include the memory. Optionally, the communication apparatus may further include a communication interface. The communication interface is used by the apparatus to communicate with another device. For example, the communication interface may be a transceiver, a hardware circuit, a bus, a module, a pin, or another type of communication interface. In an example, the communication apparatus may be a terminal device, may be an apparatus, a module, a chip, or the like disposed in the terminal device, or may be an apparatus that can be used together with the terminal device.

According to a sixth aspect, this application provides a communication apparatus. The communication apparatus includes a processor, configured to implement the method according to any one of the second aspect or the implementations of the second aspect. The processor is coupled to a memory. The memory is configured to store instructions and data. When the processor executes the instructions stored in the memory, the method described in any one of the second aspect or the implementations of the second aspect can be implemented. Optionally, the communication apparatus may further include the memory. Optionally, the communication apparatus may further include a communication interface. The communication interface is used by the apparatus to communicate with another device. For example, the communication interface may be a transceiver, a hardware circuit, a bus, a module, a pin, or another type of communication interface. In an example, the communication apparatus may be an access network device, may be an apparatus, a module, a chip, or the like disposed in the access network device, or may be an apparatus that can be used together with the access network device. In another example, the communication apparatus may be a positioning device, may be an apparatus, a module, a chip, or the like disposed in the positioning device, or may be an apparatus that can be used together with the positioning device.

According to a seventh aspect, this application provides a communication system, including a first network element and a second network element. For example, interaction between the first network element and the second network element is as follows:

A second network element sends first information to a first network element, where the first information is for determining validity of candidate training data collected by the first network element, and a determining result of the validity includes valid or invalid; the first network element receives the first information from the second network element;

the first network element collects candidate training data of an AI model;

the first network element sends second information to the second network element based on the candidate training data and the first information, where the second information indicates the determining result of the validity; and

the second network element receives the second information from the first network element.

Specifically, for a solution on the first network element side, refer to implementation in the first aspect for understanding, and for a solution on the second network element side, refer to implementation in the second aspect for understanding. Details are not described herein again. For example, the communication system includes a terminal device and an access network device. Optionally, the communication system includes a terminal device, an access network device, and a positioning device. Optionally, the terminal device is a location reference device, and the positioning device is an LMF network element.

According to an eighth aspect, this application provides a communication system, including the communication apparatus described in the third aspect or the fifth aspect and the communication apparatus described in the fourth aspect or the sixth aspect.

According to a ninth aspect, this application further provides a computer program. When the computer program is run on a computer, the computer is enabled to perform the method according to any one of the first aspect, the second aspect, or the implementations of the first aspect or the second aspect.

According to a tenth aspect, this application further provides a computer program product, including instructions. When the instructions are run on a computer, the computer is enabled to perform the method according to any one of the first aspect, the second aspect, or the implementations of the first aspect or the second aspect.

According to an eleventh aspect, this application further provides a computer-readable storage medium, where the computer-readable storage medium stores a computer program or instructions. When the computer program or the instructions are run on a computer, the computer is enabled to perform the method according to any one of the first aspect, the second aspect, or the implementations of the first aspect or the second aspect.

According to a twelfth aspect, this application further provides a chip, where the chip is configured to read a computer program stored in a memory, to perform the method according to any one of the first aspect, the second aspect, or the implementations of the first aspect or the second aspect; or the chip includes a circuit configured to perform the method according to any one of the first aspect, the second aspect, or the implementations of the first aspect or the second aspect.

According to a thirteenth aspect, this application further provides a chip system. The chip system includes a processor, configured to support an apparatus in implementing the method according to any one of the first aspect, the second aspect, or the implementations of the first aspect or the second aspect. In a possible design, the chip system further includes a memory, and the memory is configured to store a program and data that are necessary for the apparatus. The chip system may include a chip, or may include a chip and another discrete component.

For technical effects of the solutions provided in any one of the second aspect to the thirteenth aspect or the implementations of the second aspect to the thirteenth aspect, refer to corresponding descriptions in the first aspect. Details are not described again.

## BRIEF DESCRIPTION OF DRAWINGS

FIG. 1 is a diagram of a neural network iteration process;

FIG. 2 is a diagram of an architecture of a communication system to which an embodiment of this application is applicable;

FIG. 3 is a schematic flowchart of a method for obtaining training data in AI model training according to this application;

FIG. 4 is a diagram of an AI model-based CSI feedback mechanism;

FIG. 5 is an example of obtaining training data in AI model-based CSI feedback according to this application;

FIG. 6 is a diagram of a technical solution in an AI model-based uplink positioning scenario according to this application;

FIG. 7 is an example of obtaining training data in AI model-based uplink positioning according to this application;

FIG. 8 is a diagram of a technical solution in an AI model-based downlink positioning scenario according to this application;

FIG. 9 is an example of obtaining training data in AI model-based downlink positioning according to this application;

FIG. 10 is a diagram of an AI-assisted sparse beam scanning process;

FIG. 11 is an example of obtaining training data in AI model-based beam management according to this application;

FIG. 12 is a diagram of a structure of a communication apparatus according to this application; and

FIG. 13 is a diagram of a structure of a communication apparatus according to this application.

## DESCRIPTION OF EMBODIMENTS

The following describes technical solutions of this application with reference to accompanying drawings.

First, related concepts and technologies in embodiments of this application are briefly described.

An AI model is a function model that maps an input of a specific dimension to an output of a specific dimension. A model parameter of the AI model is obtained through machine learning training. For example, $f(x)=ax^2+b$ is a quadratic function model, and may be considered as an AI model, where a and b are parameters of the AI model, and may be obtained through machine learning training. For example, the AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

A training dataset is data used for model training, verification, and testing in machine learning. An amount and quality of the data affect a machine learning effect. The training data may include an input of an AI model, or include an input of the AI model and a target output. The target output is a target value output by the AI model, and may also be referred to as a truth value, an output truth value, a label, or a label sample.

Model training is a process of training a model parameter by selecting a proper loss function and using an optimization algorithm, so that a value of the loss function is less than a threshold or a value of the loss function meets a target requirement.

An AI model design mainly includes a data collection phase (for example, collection of training data and/or inference data), a model training phase, and a model inference phase. Further, an inference result application phase may be included. In the foregoing data collection phase, a data source (data source) is used to provide a training dataset and the inference data. In the model training phase, the training data (training data) provided by the data source is analyzed or trained to obtain an AI model. The AI model represents a mapping relationship between an input and an output of a model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input into the AI model, to obtain the output through the AI model. The output is the inference result. The inference result may indicate a configuration parameter used (acted) by an execution object, and/or an operation performed by the execution object. The inference result is released in the inference result application phase. For example, the inference result may be planned by an execution (actor) entity in a unified manner. For example, the execution entity may send the inference result to one or more execution objects (for example, a core network device, an access network device, or a terminal device) for execution. For another example, the execution entity may further feed back performance of the model to the data source, to facilitate subsequent model update training.

A loss function is used to measure a difference between the predicted value and a truth value of a model.

Model application is to use a trained model to resolve a practical problem.

Machine learning (machine learning, ML) is an important technical approach to realize artificial intelligence (artificial intelligence, AI). Machine learning may be divided into supervised learning, unsupervised learning, and reinforcement learning.

For example, in terms of supervised learning, based on collected sample values and sample labels, a mapping relationship between the sample values and the sample labels is learned by using a machine learning algorithm, and the learned mapping relationship is expressed by using a machine learning model. A process of training the machine learning model is a process of learning the mapping relationship. For example, in signal detection, a received signal including noise is a sample, and an actual constellation point corresponding to the signal is a label. In terms of machine learning, it is expected to learn a mapping relationship between a sample and a label through training, that is, enable a machine learning model to learn a signal detector. During training, a model parameter is optimized by calculating an error between a predicted value of a model and an actual label. Once the mapping relationship is learned, a sample label of each new sample can be predicted by using the learned mapping relationship. The mapping relationship learned through supervised learning may include a linear mapping and a non-linear mapping. A learning task may be classified into a classification task and a regression task based on a type of a label.

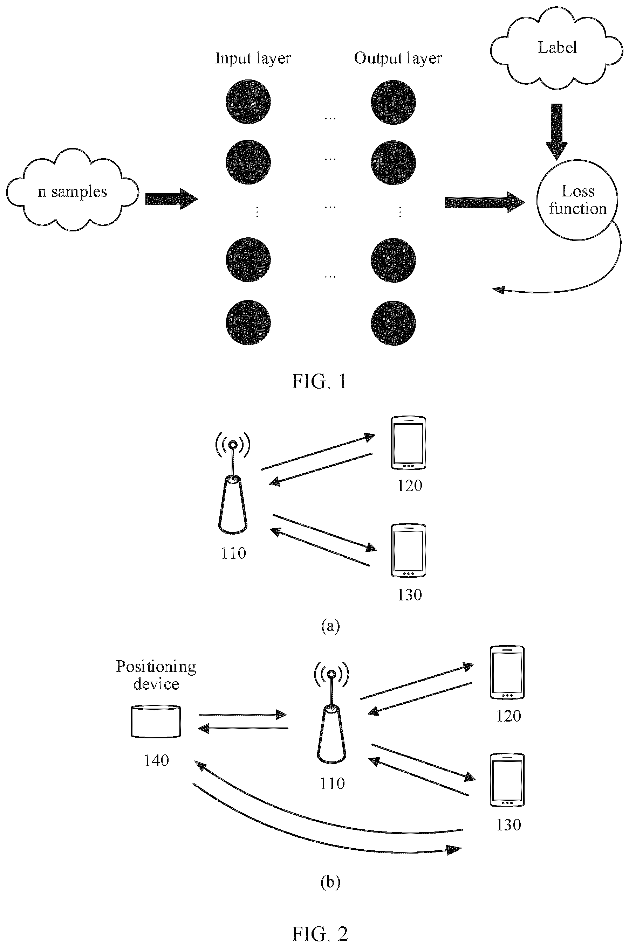

Refer to FIG. 1. FIG. 1 is a diagram of a neural network iteration process. As shown in FIG. 1, n samples are selected to form a batch, and then the batch is put into a neural network to obtain an output result. Then, the output result and a sample label are put into a loss function to calculate a loss in a current round. Finally, a derivative of each parameter is used together with a step parameter to perform parameter update. This is an iteration in a training process. The batch means "group", and indicates that the neural network processes data in batches. A batch size indicates a quantity of samples in each batch. Therefore, a sample quantity with a proper size can usually be used for parallel calculation to accelerate a training speed. An amount of data processed at a time is not excessively large.

A training dataset is a set of training samples. Each training sample is an input of a neural network. The training dataset is used for model training. The training dataset is one of the most important parts of machine learning. A training process of machine learning is essentially learning some features of the training dataset, so that in the training dataset, a difference between an output of the neural network and an ideal target value (that is, a label or an output truth value) is minimized. Usually, even if a same network structure is used, weights and outputs of the neural network trained by using different training datasets are different. Therefore, composition and selection of the training dataset determine performance of the trained neural network to some extent.

When an AI model is applied to an air interface technology, data in an actually deployed network needs to be collected regardless of whether model update/training is offline or online, to form a training dataset required for model update/training. An excellent training dataset helps design a wireless communication AI algorithm to obtain greater performance gains and improve a generalization capability and robustness of a final design algorithm in a plurality of scenarios.

When the AI model is applied to some application scenarios of the air interface technology, if an AI model training network element and a training data collection network element are not in a same network element, training data needs to be exchanged between the AI model training network element and the training data collection network element. Based on a current technical status quo, training data is usually exchanged periodically or continuously, which is prone to a waste of air interface resources.

In addition, a process in which the training data collection network element collects training data is not restricted by a requirement of the AI model training network element, and invalid collection often occurs. For example, training data collected by the training data collection network element is not training data that is truly required by the AI model training network element, causing some invalid interaction and causing a waste of air interface resources. In addition, if the AI model training network element uses the training data to perform AI model training, a training dataset of the AI model is prone to pollution, resulting in a plurality of problems such as inaccurate gain evaluation, model overfitting, a weak generalization capability, and poor scenario adaptability.

For the foregoing problems, this application provides a method for obtaining training data in AI model training, to help resolve or improve the foregoing problems.

The technical solutions provided in this application may be applied to various communication systems. For example, the communication system may be a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a satellite communication system, or a future communication system, for example, a 6G communication system, or a converged system of a plurality of systems. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this application, the network element is used as an example for description.

A communication system to which this application is applicable may include a first network element and a second network element, and optionally, further include a third network element. A quantity of first network elements, a quantity of second network elements, and a quantity of third network elements are not limited.

Refer to FIG. 2. FIG. 2 is a diagram of an architecture of a communication system to which an embodiment of this application is applicable. (a) in FIG. 2 is a diagram of an architecture of a communication system to which an embodiment of this application is applicable. For example, the communication system includes a network device 110, a terminal device 120, and a terminal device 130. The terminal devices 120 and 130 may access the network device 110, and communicate with the network device 110. Optionally, the network device 110 may be an access network device. In an implementation, the communication system may further include an AI entity. The network device may forward data that is reported by a terminal device and that is related to an AI model to the AI entity, and the AI entity performs AI-related operations such as training dataset construction and model training, and provides outputs, such as a trained AI model, model evaluation, and a test result, of the AI-related operations to the network device. In another implementation, the AI entity may also be located inside the network device 110, that is, a module of the network device 110. (b) in FIG. 2 is another diagram of an architecture of a communication system to which an embodiment of this application is applicable. The communication system includes a network device 110, a terminal device 120, a terminal device 130, and a positioning device 140. The positioning device 140 and the network device 110 may communicate with each other by using an interface message. For example, the positioning device 140 is a location management function (location management function, LMF), and the network device 110 may be an access network device, for example, a gNB or an eNB. This is not limited. For example, if the access network device 110 is a gNB, the gNB and the LMF may exchange information by using an NR positioning protocol A (NR positioning protocol A, NRPPa) message. If the access network device 110 is an eNB, the eNB and the LMF may exchange information by using an LTE positioning protocol (LTE positioning protocol, LPP) message. Optionally, a terminal device may alternatively directly communicate with the positioning device 140, for example, interaction between the terminal device 130 and the positioning device 140 shown in (b) in FIG. 2. In FIG. 2, the AI entity may be configured inside the positioning device 140, or may be disposed separately from the positioning device 140. This is not limited. Optionally, the positioning device and the network device may be different modules of a same device, or may be different separate devices.

In actual application, one network device may serve one or more terminal devices. One terminal device may also access one or more network devices. A quantity of terminal devices and a quantity of network devices included in the wireless communication system are not limited in embodiments of this application. In addition, the positioning device 140 in (b) in FIG. 2 is not limited to an LMF network element, and may alternatively be another network element having a positioning function, and a quantity of positioning devices is not limited either.

For example, the network device may be a device having a wireless transceiver function. The network device may be a device providing a wireless communication function service, is usually located on a network side, and includes but is not limited to a next generation NodeB (gNodeB, gNB) in a 5th generation (5th generation, 5G) communication system, a base station in a 6th generation (6th generation, 6G) mobile communication system, a base station in a future mobile communication system, or an access point (access point, AP) in a wireless fidelity (wireless fidelity, Wi-Fi) system, an evolved NodeB (evolved NodeB, eNB) in a long term evolution (long term evolution, LTE) system, a radio network controller (radio network controller, RNC), a NodeB (NodeB, NB), a base station controller (base station controller, BSC), a home base station (for example, a home evolved NodeB, or a home NodeB, HNB), a baseband unit (baseband unit, BBU), a transmission reception point (transmission reception point, TRP), a transmission point (transmitting point, TP), a base transceiver station (base transceiver station, BTS), a satellite, an uncrewed aerial vehicle, or the like. In a network structure, the network device may include a central unit (central unit, CU) node, a distributed unit (distributed unit, DU) node, a RAN device including a CU node and a DU node, or a RAN device including a CU-control plane node, a CU-user plane node, and a DU node. Alternatively, the network device may be a radio controller, a relay station, a vehicle-mounted device, a wearable device, and the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip disposed in the foregoing device or apparatus. Alternatively, the base station may be a mobile switching center, a device that bears a base station function in device to device (device to device, D2D), vehicle to everything (vehicle-to-everything, V2X), or machine to machine (machine to machine, M2M) communication, a network side device in a 6G network, a device that bears a base station function in a future communication system, or the like. The base station may support networks of a same access technology or different access technologies. This is not limited.

The network device may be fixed or mobile. For example, the access network device 110 may be static, and is responsible for wireless transmission and reception in one or more cells from the terminal devices 120 and 130. The access network device 110 may alternatively be mobile. For example, a helicopter or an uncrewed aerial vehicle may be configured as a mobile base station, and one or more cells may move based on a position of the mobile base station. It should be understood that, in another example, the helicopter or the uncrewed aerial vehicle may be configured as a device that communicates with the base station 110.

In this application, a communication apparatus configured to implement functions of the access network may be an access network device, may be a network device having some functions of the access network, or may be an apparatus that can support implementation of the functions of the access network, for example, a chip system, a hardware circuit, a software module, or a combination of a hardware circuit and a software module. The apparatus may be installed in the access network device or used together with the access network device. In the method in this application, an example in which the communication apparatus configured to implement the functions of the access network device is an access network device is used for description.

The terminal device may be an entity, for example, a mobile phone, that is configured to receive or transmit a signal on a user side. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device 120 may be widely used in various scenarios, for example, cellular communication, a Wi-Fi system, D2D, V2X, peer to peer (peer to peer, P2P), M2M, machine type communication (machine type communication, MTC), internet of things (internet of things, IoT), virtual reality (virtual reality, VR), augmented reality (augmented reality, AR), industrial control, automatic driving, telemedicine, a smart grid, smart furniture, smart office, smart wearable, a smart city, an uncrewed aerial vehicle, a robot, remote sensing, passive sensing, positioning, navigation and tracking, self-delivery and mobility, and the like. Some examples of the communication device 120 are a user equipment (user equipment, UE) in a 3GPP standard, a station (station, STA) in a Wi-Fi system, a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an unmanned aerial vehicle, a helicopter, a flight, a ship, a remote control device, a smart home device, an industrial device, a personal communication service (personal communication service, PCS), a phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in unmanned driving (self driving), a wireless terminal in a smart grid (smart grid), a wireless terminal in transportation safety (transportation safety), a wireless terminal in a smart city (smart city) such as a smart fueler, a terminal device on a high-speed railway, and a wireless terminal in a smart home (smart home) such as a smart speaker, a smart coffee machine, and a smart printer. The terminal device 120 may be a wireless device in the foregoing various scenarios or an apparatus disposed in the wireless device, for example, a communication module, a modem, or a chip in the foregoing device. The terminal device may also be referred to as a terminal, a user equipment (user equipment, UE), a mobile station (mobile station, MS), a mobile terminal (mobile terminal, MT), or the like. The terminal device may alternatively be a terminal device in a future wireless communication system. In addition, the terminal device may further include a location reference device, for example, an automated guided vehicle (automated guided vehicle, AGV) or a device having a similar function. A specific technology and a specific device form used by the terminal device are not limited in embodiments of this application.

In this application, a communication apparatus configured to implement a terminal device function may be a terminal device, may be a terminal device having some functions of the foregoing communication device, or may be an apparatus that can support implementation of the foregoing terminal device function, for example, a chip system. The apparatus may be installed in the terminal device or used together with the terminal device. In this application, the chip system may include a chip, or may include a chip and another discrete component.

It should be understood that a quantity of devices and a type of each device in the communication system shown in FIG. 2 are merely used as an example, and this application is not limited thereto. In actual application, the communication system may further include more terminal devices, more access network devices, and more positioning device, and may further include another network element, for example, may include a core network device and/or a network element configured to implement an artificial intelligence function.

The following describes the technical solutions provided in this application.

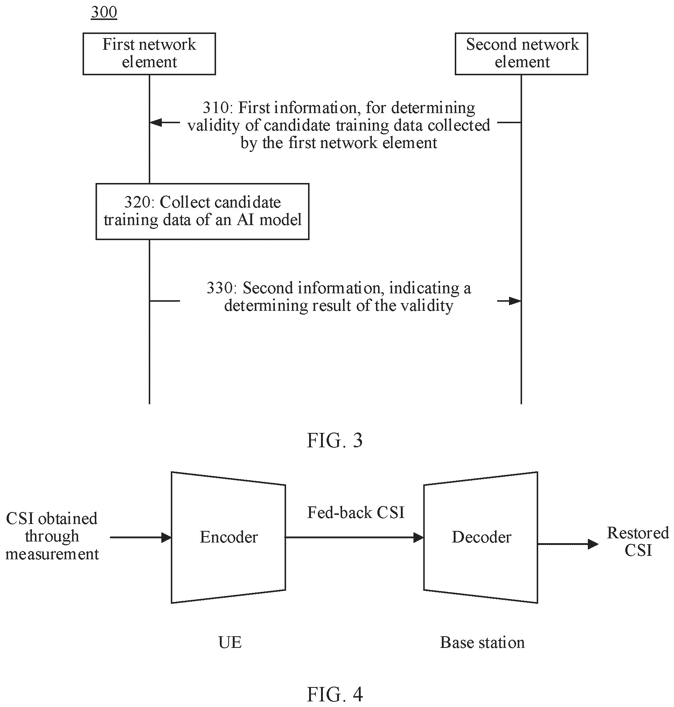

Refer to FIG. 3. FIG. 3 is a schematic flowchart of a method for obtaining training data in AI model training according to this application. In the method in FIG. 3, a first network element may be a network element that collects training data of an AI model, and a second network element is an AI model training network element. Optionally, the second network element may be an AI model training network element, and may also be a network element on which AI inference is performed. The first network element and the second network element may be logically deployed separately. In different implementations, the first network element and the second network element may be physically deployed in a same network element or different network elements. This is not limited.

310: The first network element receives first information from the second network element, where the first information indicates to determine validity of candidate training data collected by the first network element, and a determining result of the validity includes valid or invalid.

The first network element may determine the validity of the collected candidate training data based on the first information. In other words, the first network element may determine, based on the first information, whether the collected candidate training data is valid.

Specifically, if the first network element determines, based on the first information, that the collected candidate training data includes valid training data, the first network element determines that the collected candidate training data is valid; if the first network element determines, based on the first information, that the collected candidate training data does not include valid candidate training data, the first network element determines that the collected candidate training data is invalid. In other words, if some candidate training data in the candidate training data collected by the first network element is valid, the determining result is valid. If the determining result is valid, the valid candidate training data becomes training data collected by the first network element this time. For example, the valid candidate training data (which may be referred to as "valid data" for short below) may be a part or all of the collected candidate training data, which is not limited, and is collectively referred to as first training data in this specification. If the candidate training data collected by the first network element does not include valid candidate training data, the determining result is invalid.

It may be learned that, in this embodiment of this application, after collecting the candidate training data, the first network element determines validity once on a side of the first network element.

In an example, the first information indicates a constraint, and the constraint is used by the first network element to determine validity of the collected candidate training data.

For example, the constraint includes one or more of the following:

a threshold of a quality indicator and a determining criterion of the quality indicator;
an amount threshold of training data that meets a quality indicator determining criterion and a determining criterion of an amount of the training data; or
maximum duration of candidate training data collection corresponding to a single time of validity determining.

Optionally, the first information is for determining a constraint.

For example, the first information indicates one or more of the following information:

a threshold of a quality indicator;
a quality indicator determining criterion;
an amount threshold of training data that meets a quality indicator determining criterion;
a determining criterion of an amount of training data that meets a quality indicator determining criterion; or
maximum duration of candidate training data collection corresponding to a single time of validity determining.

It is assumed that the constraint includes one or more quality indicators. When the first information is for determining the constraint, there may be a plurality of implementations.

Optionally, in an example, the first information indicates a threshold of one or more quality indicators, and a determining criterion of the one or more quality indicators is predefined in a protocol. In this example, the first network element determines the constraint based on the first information and protocol predefinition.

Optionally, in another example, the first information indicates a threshold of one or more quality indicators and a determining criterion of the one or more quality indicators. In this example, the first network element determines the constraint based on the first information.

Optionally, in still another example, the constraint includes a plurality of quality indicators, the first information indicates a threshold of a part of quality indicators in the plurality of quality indicators, and a threshold of the other part of quality indicators and a determining criterion of the plurality of quality indicators are predefined in a protocol. In this example, the first network element determines the constraint based on the first information and protocol predefinition.

Optionally, in still another example, the first information indicates a threshold of a part of quality indicators and one piece of index information, and the index information is for determining a determining criterion of the part of quality indicators, a threshold of another quality indicator in the constraint, and a determining criterion of the another quality indicator. In this example, the first network element determines the constraint based on the first information and the index information.

Optionally, in still another example, the first information indicates one piece of index information, and the index information is for determining a threshold of one or more quality indicators and a determining criterion of the one or more quality indicators. In this example, the first network element determines the constraint based on the index information.

In addition, optionally, the "protocol pre-definition" in the foregoing examples may also be another implementation such as pre-configuration or pre-storage. This is not limited.

In addition, for a specific implementation in which the first information is for determining the constraint, refer to a corresponding implementation in the content part of the summary. Details are not described herein again.

In an example, the first information further indicates a maximum quantity k of times of determining the validity, where k is a positive integer.

It may be understood that, when the first information includes a plurality of pieces of the foregoing information, the plurality of pieces of information may be carried in one message or separately carried in a plurality of messages. In other words, the first information may be carried in one message or carried in a plurality of messages.

The maximum duration of candidate training data collection corresponding to a single time of validity determining is denoted as Z below, and Z is a number greater than 0. The maximum duration of candidate training data collection is also maximum duration in which the candidate training data can be used for validity determining. When retention duration of the candidate training data exceeds the maximum duration Z, the candidate training data becomes invalid and is no longer used for validity determining. Optionally, the maximum duration Z may be the same as an interval between two times of adjacent validity determining, or may be greater than or less than the interval between the two times of adjacent validity determining. If the maximum duration is greater than the interval between the two times of adjacent validity determining, candidate training data corresponding to one time of validity determining may include all or a part of candidate training data corresponding to one or more times of validity determining previous to the current validity determining. The interval between the two times of adjacent validity determining may be fixed, to be specific, validity determining is performed periodically within specific time, or may be variable, to be specific, validity determining time is not fixed. For example, counting for validity determining is performed on candidate training data that meets the threshold requirement. When an amount of candidate training data that meets the threshold requirement meets a requirement, the current time of validity determining is completed, and a determining result is valid. When an amount of candidate training data that meets the threshold requirement does not meet the requirement and exceeds a maximum validity determining interval T (that is, a preset interval threshold), or an amount of collected candidate training data exceeds a preset threshold (that is, a maximum amount of collected candidate training data), the current time of validity determining is also completed, and a determining result is invalid. One or more of specific time-related information of the validity determining such as determining time, start time of periodic determining, or a period, the maximum interval T, and the maximum amount of collected candidate training data may be all or partially predefined in a protocol, or may be based on a configuration.

It is known from the foregoing descriptions that in this application, the second network element sends the first information to the first network element, where the first information is for determining the validity of the candidate training data collected by the first network element. Actually, the second network element indicates a requirement for training data to the second network element by using the first information. In other words, only candidate training data that meets the requirement can be used as training data for training or update of an AI model. It can be learned that only after "filtering" is performed on the candidate training data collected by the first network element, the candidate training data that meets the requirement can be used as the training data, and the first network element provides the training data for the second network element for use. Therefore, after collecting the candidate training data, the first network element determines validity of the collected candidate training data based on the first information. If the determining result is invalid, it indicates that the candidate training data collected this time is not required by the second network element, that is, the candidate training data collected this time does not include candidate training data that meets the requirement. In this case, the first network element may re-collect training data. Therefore, in a process in which the first network element collects training data of the AI model, the training data may not be obtained through one collection. In specific implementation, the maximum interval T of the single time of validity determining is equivalent to specifying how often the first network element performs the validity determining.

For example, if a determining result of an $i^{th}$ time of validity determining is invalid, the first network element re-collects candidate training data. After a period of time, the first network element performs validity determining on collected candidate training data for the $(i+1)^{th}$ time, where i is a positive integer. Therefore, in this embodiment of this application, a quantity of times that the first network element collects candidate training data of the AI model corresponds to or is equal to a quantity of times that the first network element performs validity determining. In other words, each time the first network element performs validity determining, it indicates that candidate training data is collected once before this time of determining. For clarity of descriptions of the technical solution, one candidate training data collection exactly before the $i^{th}$ time of determining is referred to as the $i^{th}$ collection in the specification. Because there are different implementations, in this example, validity determining performed for the $(i+1)^{th}$ time may be for candidate training data obtained through the $(i+1)^{th}$ collection, or may be for candidate training data obtained through the $(i+1)^{th}$ collection and one or more collections before the $(i+1)^{th}$ collection. This is not limited. In this implementation, a problem of how the first network element processes, after one time of validity determining, candidate training data collected before this time of validity determining may be involved.

In an example, after starting to collect candidate training data for the $i^{th}$ time, the first network element performs, after an interval T0 (less than or equal to the maximum interval T), validity determining on the candidate training data collected for the $i^{th}$ time, that is, performs the $i^{th}$ time of validity determining. It is assumed that the determining result of the $i^{th}$ time of validity determining is invalid. If the maximum quantity k of times of validity determining is not exceeded, the first network element may discard the candidate training data collected for the $i^{th}$ time, and perform the $(i+1)^{th}$ collection. In this example, each time of validity determining is performed only on candidate training data collected within the interval T0. When the current collection is invalid, the candidate training data collected this time is discarded. In another example, one time of validity determining may be performed for candidate training data collected within a plurality of intervals T0. Alternatively, candidate training data for which one time of validity determining is performed may be collected for a plurality of times. It is assumed that the determining result of the $i^{th}$ time of validity determining is invalid. If the maximum quantity k of times of validity determining is not exceeded, the first network element may reserve a part of candidate training data collected for the $i^{th}$ time. For example, the first network element reserves a part of candidate training data that is in the candidate training data collected for the $i^{th}$ time and that meets a determining criterion of a part of the quality indicators in the constraint. Then, the $(i+1)^{th}$ collection is performed. After the interval T0, the first network element performs validity determining on candidate training data collected for the $(i+1)^{th}$ time and a part of candidate training data that is collected for the $i^{th}$ time and whose retention duration does not exceed the maximum duration Z, that is, performs an $(i+1)^{th}$ time of validity determining. Optionally, before the maximum quantity k of times of validity determining is exceeded, if a result of validity determining is always invalid, the first network element may reserve candidate training data that meets a determining criterion of a part of quality indicators and that is in candidate training data collected each time, and after completing a new collection, perform validity determining on reserved historical candidate training data that meets the determining criterion of the part of quality indicators and newly collected candidate training data together. It can be learned that, in one time of validity determining, candidate training data that is determined to be invalid is for this time of validity determining, and it does not mean that the candidate training data determined to be invalid in this time of validity determining can never be used as the training data. These specific implementations are not limited in this application.

In an example, the constraint is based on an application scenario of the AI model. For example, the application scenario of the AI model includes but is not limited to the following scenarios:

AI model-based CSI feedback or CSI prediction, AI model-based positioning, or AI model-based beam management.

In different application scenarios, one or more of the quality indicator, the threshold of the quality indicator, the quality indicator determining criterion, the amount threshold of training data that meets a quality indicator determining criterion, and the determining criterion of the amount of the training data in the constraint may be different. The following separately provides examples for different application scenarios.

320: The first network element collects candidate training data of the AI model.

The first network element collects the candidate training data of the AI model. Optionally, after receiving the first information, that is, based on triggering of the first information, the first network element may start to collect the candidate training data of the AI model. Optionally, before or when receiving the first information, the first network element may start to collect the candidate training data of the AI model. That is, a sequence of step 310 and step 320 may not be limited.

Optionally, because a requirement for training data required by the second network element may change, when the requirement of the second network element for the training data changes, the second network element may send updated first information to the first network element. Update of the first information mainly refers to update of the constraint determined based on the first information. When receiving the updated first information, the first network element determines validity of collected candidate training data based on the constraint determined by the updated first information. In the following embodiments, only the first information received by the first network element for a specific time is used as an example to describe validity determining and a subsequent procedure.

330: The first network element sends second information to the second network element, where the second information indicates the determining result of the validity of the candidate training data collected by the first network element.

If the first network element determines, based on the first information, that the collected candidate training data is valid, the first network element sends the second information to the second network element, where the second information indicates that the candidate training data collected by the first network element is valid.

Optionally, in an example, the first network element sends the first training data to the second network element, and the first training data implicitly indicates that the candidate training data collected by the first network element is valid. Optionally, in another example, the first network element sends the first training data to the second network element. In this case, the first network element further sends, to the second network element, information indicating that the candidate training data collected by the first network element is valid, for example, information a. In this example, the first network element sends the first training data and the information a to the second network element, where the information indicates that the current collection is valid.

If the first network element determines, based on the first information, that the collected candidate training data is invalid, the first network element sends the second information to the second network element, where the second information indicates that the candidate training data collected by the first network element is invalid. It should be understood that, if the candidate training data collected by the first network element is invalid, the first network element sends, to the second network element, only an indication indicating that the collected candidate training data is invalid, and does not send the collected invalid candidate training data, thereby reducing a waste of air interface resources.

In an example, if the first network element determines that the collected candidate training data is invalid, the first network element discards the candidate training data collected this time. Alternatively, in some implementations described above, invalid candidate training data in one time of validity determining may be reserved for subsequent validity determining. Further, if the second network element indicates the first network element to re-collect the training data of the AI model, the first network element re-collects the candidate training data of the AI model.

Optionally, in step 320, that the first network element collects the candidate training data of the AI model may be specifically that the first network element measures a reference signal from the second network element or a third network element, to obtain the candidate training data of the AI model. In other words, the candidate training data includes a measurement result obtained by the first network element by measuring the reference signal. In this application, the reference signal is usually a signal for channel measurement. The channel measurement may be used for one or more of functions such as channel state information feedback, beam management, or positioning. The reference signal may include one or more of a channel state information reference signal, a synchronization signal such as a primary synchronization signal and/or a secondary synchronization signal, a physical broadcast signal, a synchronization signal and physical broadcast channel block (SSB), a demodulation reference signal, a phase tracking reference signal, or a positioning reference signal. When the AI model is applied to different scenarios, reference signals may be different. The following embodiments are separately described for different application scenarios by using examples. In addition, the third network element is a network element different from the second network element.

It may be understood that, in an example, the first network element measures a reference signal from the second network element, to obtain a measurement result. Optionally, there may be one or more measurement results. The candidate training data that is of the AI model and that is collected by the first network element includes the one or more measurement results. In this example, before the second network element sends the reference signal to the first network element, the second network element sends air interface transmission configuration information to the first network element. The air interface transmission configuration information corresponds to an air interface transmission configuration, and the air interface transmission configuration information indicates the first network element to collect the candidate training data of the AI model based on the air interface transmission configuration. In other words, the second network element sends the reference signal based on the air interface transmission configuration, and the first network element measures the reference signal from the second network element, to obtain the measurement result, to collect the candidate training data that is based on the air interface transmission configuration. Optionally, the first network element is a UE, and the second network element is an access network device, for example, a base station.

In another example, the first network element measures a signal from the third network element, to obtain a measurement result. Optionally, there may be one or more measurement results. The candidate training data that is of the AI model and that is collected by the first network element includes the one or more measurement results. Optionally, the first network element is an access network device, for example, a base station, and the third network element is a UE. In this example, before measuring the reference signal from the third network element, the first network element configures the third network element to send the reference signal. Specifically, the first network element sends air interface transmission configuration information to the third network element, where the air interface transmission configuration information corresponds to an air interface transmission configuration. Similar to the foregoing example, the third network element sends the reference signal based on the air interface transmission configuration, and the first network element measures the reference signal from the third network element, to obtain the measurement result, to obtain the candidate training data that is based on the air interface transmission configuration.

In the foregoing examples, optionally, the air interface transmission configuration may include one or more of the following:

transmit power of a reference signal;
a quantity of antenna ports used for a reference signal;
bandwidth of a reference signal;
a frequency domain density of a reference signal; or
a period of a reference signal.

It can be learned from the procedure shown in FIG. 3 that the first network element collects the candidate training data of the AI model, and determines the validity of the candidate training data based on the first information. This may be understood as filtering the collected candidate training data. When the collected candidate training data is valid, the first network element sends the valid candidate training data to the second network element, so that the second network element trains or updates the AI model. In this case, the valid candidate training data is the training data. When the candidate training data collected by the first network element is invalid, the first network element indicates, to the second network element, that the current collection of the candidate training data is invalid.

It may be understood that if candidate training data collected once is invalid, it also indicates that no training data is collected this time; if candidate training data collected once is valid, it also indicates that training data is collected this time. In this case, the valid candidate training data becomes the training data, which is referred to as the first training data in this specification and is provided by the first network element for the second network element.

It should be understood that in embodiments of this application, "the first network element re-collects training data of the AI model" also indicates "the first network element re-collects candidate training data of the AI model". The first network element attempts to re-collect training data only when the first network element does not collect training data. A purpose of re-collection is to expect to collect the training data of the AI model. However, in a process of collecting the training data of the AI model, the candidate training data is first collected, and then the training data is obtained through filtering from the candidate training data.

After receiving the second information of the first network element, if the second network element determines, based on the second information, that the current collection of the first network element is invalid, in a possible case, the second network element determines that training data of the AI model needs to be re-collected.

In an example, the second network element sends third information to the first network element, where the third information indicates the first network element to re-collect training data of the AI model. Optionally, in an example, the third information indicates the maximum quantity k of times of validity determining. Optionally, each time of validity determining includes a batch of new training data, that is, collection of a new training dataset. Therefore, the maximum quantity of times of validity determining may also be referred to as a maximum quantity of times of performing training dataset collection.

In this example, when the second network element receives, from the first network element, information indicating that the candidate training data collected by the first network element is invalid, the second network element sends the third information to the first network element, to indicate the first network element to re-collect training data of the AI model. In addition, the third information indicates the maximum quantity k of times of validity determining, where k is a positive integer. If candidate training data corresponding to the 1st time of validity determining is invalid, the first network element re-collects or continues to collect candidate training data based on the third information. Re-collection or continuing collection may be performed for a plurality of times. After each re-collection or continuing collection, validity determining is performed. If a determining result is invalid, the first network element may continue to perform next re-collection and next time of validity determining until the maximum quantity k of times of validity determining is reached. If determining results of a 1st time of validity determining to a $(k-1)^{th}$ time of validity determining are all invalid, and a determining result of a $k^{th}$ time of validity determining is still invalid, the first network element stops collecting training data.

In this example, when indicating, by using the third information, the first network element to re-collect training data, the second network element may further indicate the maximum quantity k of times of validity determining to the first network element. In other words, the maximum quantity k of times of validity determining is sent after the second network element determines that training data needs to be re-collected. The maximum quantity k of times of validity determining may be included in the third information, or may be carried in other information except the third information. Optionally, in another example, as described in step 501, the second network element indicates, in the first information sent to the first network element, the maximum quantity k of times of validity determining. The second network element indicates the maximum quantity k of times of validity determining to the first network element, to restrict a process in which the first network element re-collects candidate training data, so that when no training data (that is, valid candidate training data) is collected, the first network element does not fall into a cycle of re-collection without a time limit, but stops collection after the maximum quantity k of times of validity determining is reached, regardless of whether training data is collected.

Before the maximum quantity k of times of validity determining is exceeded, if the first network element determines, based on the first information, that a determining result of a $j^{th}$ time of validity determining is valid, that is, candidate training data for which the $j^{th}$ time of validity determining is performed includes valid candidate training data, the first network element sends fourth information to the second network element. The fourth information includes second training data, and the fourth information indicates that the determining result of the $j^{th}$ time of validity determining is valid. The second training data may specifically include the valid candidate training data in the candidate training data for which the $j^{th}$ time of validity determining is performed. j is less than or equal to k, and j is a positive integer.

It should be noted that the $j^{th}$ time of validity determining may be considered as validity determining performed on a set of candidate training data, and all candidate training data included in the set is training data for which the $j^{th}$ time of validity determining is performed. The training data for which the $j^{th}$ time of validity determining is performed is not limited to the candidate training data collected for the $j^{th}$ time, and may further include candidate training data obtained for one or more collections before the $j^{th}$ collection. This is not limited.

Optionally, if the determining result of the $j^{th}$ time of validity determining is valid, the first network element sends the second training data and information a to the second network element, where the information a indicates that the current collection is valid.

In addition, in embodiments of this application, the maximum quantity k of times of validity determining corresponds to a start moment, and the start moment should be understood as a start moment of a training data collection process corresponding to the maximum quantity k of times of validity determining. For example, the start moment may be a moment at which the first network element receives the first information or the third information. In other words, the first network element starts to collect the training data of the AI model from the moment at which the first information or the third information is received. Optionally, an end moment of the collection process is uncertain. For example, before the maximum quantity k of times of validity determining is exceeded, if the determining result of the $j^{th}$ time of validity determining is valid, the collection process ends, and the first network element sends valid candidate training data (that is, the first training data) to the second network element, where j is less than or equal to k, and j is a positive integer. However, if determining results from a 1st time of validity determining to a $k^{th}$ time of validity determining are all invalid, it is determined that a moment at which a determining result of the $k^{th}$ time of validity determining is invalid is the end moment of the collection process.

According to the method for obtaining training data provided in this application, the training data collection network element performs validity determining on collected candidate training data, and provides valid candidate training data for the AI model training network element, to ensure that the collection network element provides only training data that meets a requirement for the training network element. Because training data that does not meet the requirement is filtered out on a collection network element side, invalid training data exchange is omitted. This not only saves air interface resources but also avoids pollution of a training dataset on a training network element side, and avoids other adverse impact.

The foregoing describes in detail a main procedure of the method for obtaining training data for an AI model. The following describes, by using an example, the method for obtaining training data when the AI model is applied to different scenarios.

Application scenario 1

AI model-based channel state information (channel state information, CSI) feedback or CSI prediction

For example, AI model training or update in the application scenario 1 is deployed on an access network device side. An access network device sends a downlink reference signal to a UE, so that the UE obtains a measurement result by measuring the downlink reference signal, where the measurement result is candidate training data. The UE determines validity of the obtained candidate training data, and provides valid candidate training data to the access network device side for AI model training or update. For example, in this application scenario, the downlink reference signal may be specifically a CSI-RS. The valid candidate training data provided by the UE for the access network device is a label of the AI model, and is specifically CSI.

In many application scenarios, the access network side needs to obtain downlink CSI, to determine one or more of configurations such as a resource for scheduling a downlink data channel of the UE, a modulation and coding scheme (modulation and coding scheme, MCS), and precoding. In a time division duplex (time division duplex, TDD) system, due to reciprocity between an uplink channel and a downlink channel, the access network device may obtain uplink CSI by measuring an uplink reference signal, to infer downlink CSI, for example, use the uplink CSI as the downlink CSI. In a frequency division duplex (frequency division duplex, FDD) system, reciprocity between an uplink channel and an uplink channel cannot be ensured, and downlink CSI is obtained by a UE by measuring a downlink reference signal. For example, the UE obtains the downlink CSI by measuring a signal such as a CSI-RS or a synchronization signal and physical broadcast channel block (synchronization signal and physical broadcast channel block, SSB). The UE generates a CSI report in a manner predefined in a protocol or pre-configured by the access network device, and feeds back the downlink CSI to the access network device by using the CSI report, so that the access network device obtains the downlink CSI.

Refer to FIG. 4. FIG. 4 is a diagram of an AI model-based CSI feedback mechanism. As shown in FIG. 4, an autoencoder (autoencoder, AE) model includes two sub-models: an encoder (encoder) and a decoder (decoder), and an AE generally refers to a network structure including two sub-models. The AE model may also be referred to as a bilateral model, a dual-ended model, or a collaborative model. The encoder and the decoder of the AE are usually trained together and may be used together. CSI feedback may be implemented based on an AI model of the AE. For example, the UE side measures a downlink reference signal sent by a base station, to obtain measured CSI. The UE compresses and quantizes, by using the encoder, the CSI obtained through measurement, and feeds back compressed and quantized information to the base station, for example, "the fed-back CSI" shown in FIG. 4. The base station restores the "fed-back CSI" by using the decoder, to obtain the restored CSI. For the base station, an input of the decoder is the information about the CSI fed back by the UE, and the CSI obtained by the UE through measurement needs to be used as a truth value (or a label) of the restored CSI for training of the decoder.

In the application scenario 1, the AI model deployed on the access network device side may be the decoder shown in FIG. 4.

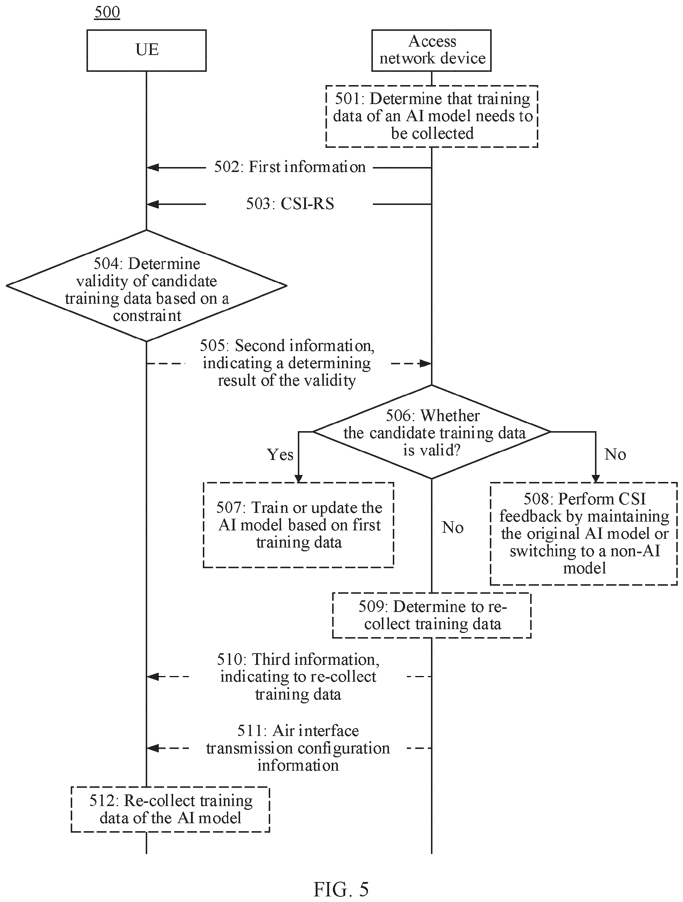

Refer to FIG. 5. FIG. 5 is an example of obtaining training data in AI model-based CSI feedback according to this application.

501: Optionally, an access network device determines that training data of an AI model needs to be collected.

502: The access network device sends first information to a UE, where the first information is for determining validity of candidate training data collected by the UE. Optionally, a determining result of the validity may be valid or invalid.

For example, the first information indicates a constraint for determining the validity of the candidate training data collected by the UE.

For the first information, the constraint, and the like, refer to related descriptions in step 310. Details are not described herein again.

In the application scenario 1, in an example, the quality indicator of the measurement result may be an SINR of the training data and an amount of the training data. The first information indicates a threshold Q of the SINR and a threshold N of the amount of the training data. A determining criterion of the SINR and a determining criterion of the amount of the training data (for example, the SINR is greater than or equal to Q, and the amount of the training data is greater than or equal to N) may be predefined in a protocol. In another example, the first information indicates a threshold Q of an SINR, a threshold N of an amount of the training data, a determining criterion of the SINR, and a determining criterion of the amount of the training data. For example, the first information indicates the threshold Q and the threshold N, and the first information includes an information field indicating the determining criterion. For example, the information field includes 1 bit, and the 1 bit corresponds to the determining criterion of the SINR and the determining criterion of the amount of the training data. For example, a value "1" of the 1 bit indicates that "the SINR of the training data is greater than or equal to Q, and the amount of the training data is greater than or equal to N", and a value "0" of the 1 bit indicates that "the SINR of the training data is greater than Q, and the amount of the training data is greater than N". For example, the information field includes 2 bits $b_1b_0$, where $b_1$ corresponds to the determining criterion of the SINR, and $b_0$ corresponds to the determining criterion of the amount of the training data. For example, when a value of $b_1$ is 1, it indicates that "the SINR of the training data is greater than or equal to Q"; when the value of $b_1$ is 0, it indicates that "the SINR of the training data is less than Q". Indicating the determining criterion of the amount of the training data by $b_0$ is similar. Details are not described again. In still another example, the first information indicates a threshold Q of an SINR of the training data and a threshold N of an amount of the training data. In addition, the first information indicates a determining criterion of a part of quality indicators, and a determining criterion of the other part of quality indicators is predefined in a protocol. For example, the first information indicates the threshold Q and the threshold N. In addition, the first information further includes a 1-bit information field. When a value of the 1 bit is 1, it indicates that "the SINR is greater than or equal to Q". When the value of the 1 bit is 0, it indicates that "the SINR is less than Q". A determining criterion of the amount of the training data is predefined in a protocol, for example, "the amount of the training data is at least N". It should be understood that the foregoing implementation is merely an example in which the first information is for determining the constraint. This is not limited.

For example, N may be an integer multiple of a batch during AI model training or an amount of training data required for AI model convergence.

503: The access network device sends a reference signal to the UE.

The UE obtains one or more measurement results by measuring the reference signal of the access network device. In this application, the measurement result may be alternatively represented as a reference signal measurement result or a channel measurement result. The replacement expression is also applicable to an embodiment in another application scenario. Details are not described below.

Optionally, the measurement result includes a channel response, for example, a channel response matrix.

In addition, optionally, the UE may obtain one measurement result through one measurement. In this case, the candidate training data includes the one measurement result. Optionally, the UE obtains a plurality of measurement results through a plurality of measurements. In this case, the candidate training data includes the plurality of measurement results.

For example, the quality indicator of the measurement result may include but is not limited to one or more of the following: first-path power, a first-path arrival delay, a timing error group (timing error group, TEG), average power of a time-domain sampling point, a phase difference between antenna ports, an equivalent SINR of a full band or a subband, an interference level of the full band or the subband, a line-of-sight (line of light, LOS) probability, an inter-site synchronization error, or measurement result confidence. This is not limited. The indicator quality is applicable to the application scenario 1 or another application scenario described below. This is not limited. It should be understood that these quality indicators may be obtained by performing corresponding processing on the measurement result of the reference signal. A specific processing process is not limited herein, for example, may be some known or future processing.

It should be understood that before the access network device sends the reference signal to the UE, the access network device further sends, to the UE, air interface transmission configuration information corresponding to the reference signal. The air interface transmission configuration information indicates a related air interface configuration for sending the reference signal by the access network device. For example, the air interface transmission configuration information may include but is not limited to one or more of information such as transmit power of the reference signal, a quantity of antenna ports used by the access network device to send the reference signal, bandwidth of the reference signal, a frequency domain density of the reference signal, and a period of the reference signal. A person skilled in the art may understand that the air interface transmission configuration information may further include other related information, which is not listed one by one herein.

In this scenario, the candidate training data collected by the UE is one or more measurement results or one or more channel measurement results obtained by measuring the reference signal from the access network device.

For example, in a 5G system, the reference signal may be a channel state information-reference signal (channel state information reference signal, CSI-RS).

504: The UE determines the validity of the collected candidate training data based on the first information.

For example, it is assumed that the candidate training data is a plurality of measurement results obtained by the UE by measuring the reference signal. The plurality of measurement results are the candidate training data. The UE determines, based on the constraint, whether the plurality of measurement results include valid candidate training data (or a valid measurement result). In the foregoing example, if the constraint is "the quality indicator (for example, the SINR) is greater than or equal to the threshold Q, and an amount of candidate training data whose quality indicator is greater than or equal to the threshold Q is at least N", the UE determines whether the plurality of collected measurement results include a measurement result whose quality is equal to or greater than the threshold Q. For brevity of description, the measurement result whose quality indicator is equal to or greater than the threshold Q is denoted as a measurement result 1 below. If the UE determines that the plurality of collected measurement results include the measurement result 1, it is further required to determine whether a quantity of measurement results 1 reaches N. If it is determined, based on the constraint, that a valid measurement result is collected, the UE determines that candidate training data collected this time is valid. The valid candidate training data (that is, the first training data, which is also referred to as valid data below) is a part of measurement results that meet the constraint. For example, if the quantity of measurement results 1 is P, where P is an integer greater than or equal to N, the P measurement results 1 are valid data collected this time, that is, the first training data.

On the contrary, if the UE determines that the plurality of collected measurement results do not include a measurement result that meets the constraint, for example, the plurality of collected measurement results include a measurement result 1 whose SINR is equal to or greater than the threshold Q, but a quantity of measurement results 1 is less than N; or SINRs of the plurality of collected measurement results are all less than the threshold Q, the UE determines that candidate training data collected this time is invalid.

505: The UE sends second information to the access network device based on determining of the validity of the collected candidate training data, where the second information indicates the determining result of the validity.

In a possible case, the second information indicates that the candidate training data collected by the UE is valid. In an example, the second information may be the collected candidate training data that is valid, for example, the P measurement results 1 in the foregoing example. In this example, the P measurement results 1 are valid candidate training data, and the P measurement results 1 also implicitly indicate that the candidate training data collected by the UE is valid. In another example, the UE sends the second information and the valid candidate training data. In this example, the second information indicates that the candidate training data collected by the UE is valid. For example, the second information may include 1 bit. When a value of the 1 bit is "1", it indicates that the candidate training data collected by the UE is valid. In addition, the UE sends the valid candidate training data to the access network device. In contrast, the previous example can further reduce signaling overheads on the premise that the candidate training data collected by the UE can be indicated to be valid.

In another possible case, the second information indicates that the candidate training data collected by the UE is invalid. In an example, the second information may include 1 bit. When a value of the 1 bit is "0", it indicates that the candidate training data collected by the UE is invalid.

For example, the second information may be carried by using uplink control information (uplink control information, UCI) signaling. For example, the UCI includes 1-bit information, and the 1 bit information indicates that the candidate training data collected by the UE is valid or invalid. Optionally, as shown in the foregoing example, if the UE implicitly indicates, by using valid candidate training data, that the collected candidate training data is valid, the valid candidate training data may also be sent in the UCI. This is not limited.

506: The access network device determines, based on the second information, whether the candidate training data of the UE is valid.

Corresponding to the determining result in step 505, in a possible case, the second information indicates that the candidate training data collected by the UE is valid. In this case, the access network device further obtains, from the UE, the valid candidate training data collected by the UE. Further, the access network device trains or updates the AI model based on the valid candidate training data, as shown in step 507.

507: The access network device trains the AI model, to obtain the AI model or update the AI model.

In another possible case, the second information indicates that the candidate training data collected by the UE is invalid. In a possible implementation of this case, the access network device maintains CSI feedback in the original AI model, or switches to CSI feedback in a non-AI model. In an example, keeping the original AI model may be for a scenario in which a trained AI model has been deployed on the access network device and the training data is collected this time for a purpose of updating the AI model. Switching to the non-AI model may be for a scenario in which there is no trained AI model on the access network device and the training data is collected this time for training to obtain the AI model. In this scenario, if no valid candidate training data is obtained during the current collection, the access network device may switch to the CSI feedback in the non-AI model. The two possible cases are shown in step 508.

508: The access network device performs CSI feedback based on the original AI model or by switching to the non-AI model.

When the access network device performs step 507 or step 508, a training data collection procedure ends.

Optionally, in another possible case, the second information indicates that the candidate training data collected by the UE is invalid. After obtaining the second information, the access network device determines to re-collect training data, as shown in step 509 and step 510.

509: The access network device determines to re-collect training data of the AI model.

510: The access network device sends third information to the UE, where the third information indicates the UE to re-collect training data of the AI model.

Optionally, in a possible implementation, the third information further indicates a maximum quantity k of times of validity determining, where k is a positive integer. Optionally, in another possible implementation, the maximum quantity k of times of validity determining may also be indicated by the first information. This is not limited. The two implementations have been described in detail in the procedure in FIG. 3. Details are not described herein again.

Optionally, when the training data of the AI model is re-collected, the access network device may update an air interface transmission configuration. Correspondingly, the UE re-collects candidate training data of the AI model based on the updated air interface transmission configuration.

511: Optionally, the access network device sends air interface transmission configuration information to the UE, where the air interface transmission configuration information indicates the updated air interface transmission configuration.

The air interface transmission configuration information has been described above. If the air interface transmission configuration is updated, the air interface transmission configuration information in step 511 indicates the updated air interface transmission configuration. For example, the update of the air interface transmission configuration may include update of the transmit power of the reference signal, the quantity of antenna ports used by the access network device to send the reference signal, the bandwidth of the reference signal, the frequency domain density of the reference signal, the period of the reference signal, and the like. This is not limited. For example, the update of the air interface transmission configuration includes an increase in the transmit power of the reference signal and an increase in the frequency domain density of the reference signal. In this case, the access network device sends the reference signal to the UE at higher transmit power and a higher frequency domain density, to attempt to enable the UE to obtain candidate training data that meets the constraint. The air interface transmission configuration is updated to ensure accuracy of AI model-based CSI feedback over an air interface.

Certainly, the original air interface transmission configuration may not be updated when the training data of the AI model is re-collected. In this case, the UE re-collects the candidate training data in the original air interface transmission configuration, determines validity of the re-collected candidate training data based on the constraint, and indicates a validity determining result to the access network device.

512: Optionally, the UE re-collects training data of the AI model.

It should be understood that, in a procedure of re-collecting the training data, validity determining of the re-collected candidate training data and an indication of a determining result are similar to those in the foregoing procedures in FIG. 5. Details are not described again. It should be understood that, in a process of re-collecting the training data, the UE is constrained by the maximum quantity k of times of validity determining.

Optionally, the maximum quantity k of times of validity determining may be determined by the access network device based on urgency of training data collection. For example, the urgency may be an interval from last update of the AI model to a current time point. For example, if an interval from the last update of the AI model to the current time point is large, and exceeds a threshold, it is considered that an update requirement of the AI model is urgent. A larger interval indicates a higher probability that a channel environment changes, and indicates that a matching degree of the AI model to a current channel environment may be reduced. Therefore, an update requirement is more urgent. In this case, the maximum quantity k of times of validity determining may be correspondingly set to a larger value, so that after one invalid collection, valid candidate training data is expected to be obtained through a plurality of re-collections. If an interval from the last update of the AI model to the current time point is very small, for example, less than a threshold, it is considered that an update requirement is not urgent, and the maximum quantity k of times of validity determining may be set to a small value. Optionally, an urgency determining criterion may also be implemented in another manner. This is not limited.

It can be learned that the method for obtaining training data in AI model training provided in this application is applied to the AI model-based CSI feedback or CSI prediction scenario, so that a waste of air interface resources in an AI model training procedure can be reduced. In addition, the UE sends invalid training data to the access network device, which causes pollution to a training dataset of the AI model, thereby affecting training or update of the AI model and causing inaccurate gain evaluation. This solution avoids the foregoing impact.

Application scenario 2

AI model-based positioning scenario

Because uplink positioning is different from downlink positioning, the following separately describes application of the technical solutions in this application in uplink positioning and downlink positioning.

1. Application in uplink positioning

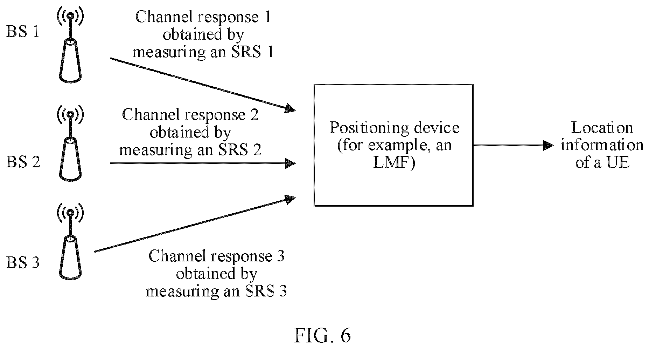

Refer to FIG. 6. FIG. 6 is a diagram of a technical solution in an AI model-based uplink positioning scenario according to this application. As shown in FIG. 6, in uplink positioning, AI model training or update is performed on a network side. A 5G system is used as an example. The AI model may be deployed on a positioning device in a core network, for example, an LMF network element. For uplink positioning, an input of the AI model is one or more channel responses (or channel measurement results) corresponding to one or more sounding reference signals, and an output of the AI model is a location of the UE. There may be one or more transmitters, for example, a UE, of the one or more sounding reference signals, and there may be one or more receivers, for example, an access network device.

As shown in FIG. 6, in uplink positioning, when training a positioning-used AI model, a positioning device obtains, from an access network side, a plurality of measurement results obtained by one access network device by measuring a plurality of sounding reference signals or by each of a plurality of access network devices by measuring one or more sounding reference signals, and location information of a third network element. The plurality of sounding reference signals may include a plurality of sounding reference signals from one third network element, or include one or more sounding reference signals from each of a plurality of third network elements. Location information of the third network element sending a plurality of sounding reference signals at different moments, or location information of the plurality of third network elements sending one or more sounding reference signals sent at one or more moments is used as a true value (that is, a label) of location information output by the AI model.

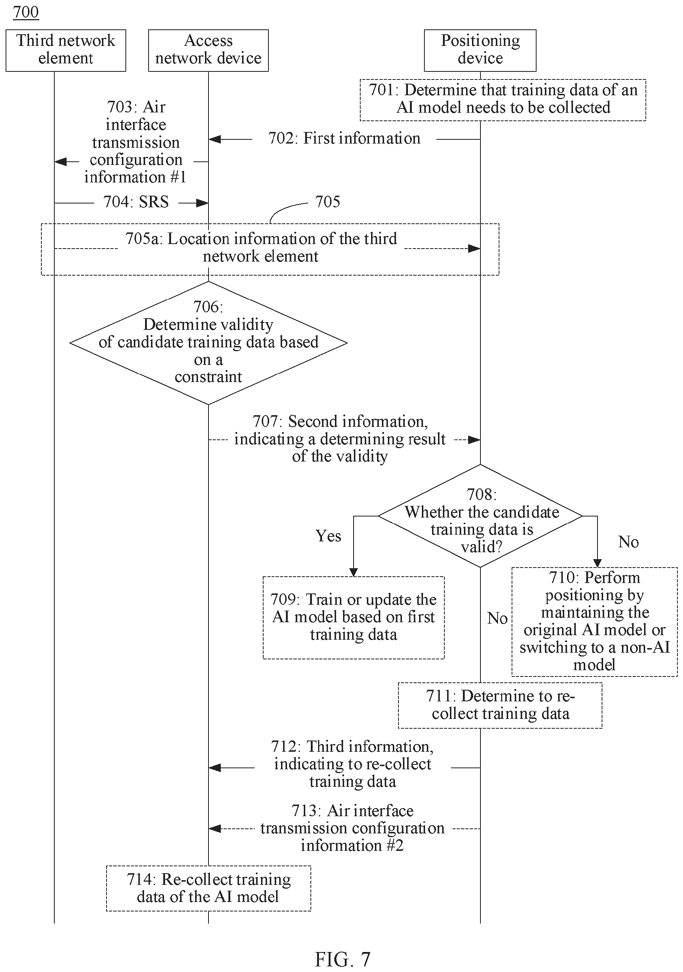

Refer to FIG. 7. FIG. 7 is an example of obtaining training data in AI model-based uplink positioning according to this application.

701: Optionally, a positioning device determines that training data of an AI model needs to be collected.

702: The positioning device sends first information to an access network, where the first information is for determining validity of candidate training data collected by the access network device. Optionally, a determining result may be valid or invalid.

For example, the first information may be carried in an interface message between the positioning device and the access network device. A 5G system is used as an example. If the positioning device is an LMF, and the access network device is a gNB, the first information between the LMF and the gNB may be included in an NRPPa message.

703: The access network device sends air interface transmission configuration information (for example, air interface transmission configuration information #1) to a third network element, where the air interface transmission configuration information indicates an air interface transmission configuration used by the third network element to send a sounding reference signal.

In this embodiment, the third network element is a network element that can provide location information of the third network element. In an example, the third network element may be a location reference device. The location reference device may be considered as a special network element, and may be usually configured by a network vendor. For example, the network vendor may configure one or more of a location, a sending capability, a receiving capability, a processing capability, and the like of the location reference device. The location reference device may provide location information of the location reference device for the access network device. For example, the third network element may be a reference UE, or an automated guided vehicle (automated guided vehicle, AGV). In another example, the third network element may alternatively be an ordinary UE. Herein, the ordinary UE is relative to the location reference device. After obtaining location information of the ordinary UE by using some positioning methods, the ordinary UE may provide the location information to the access network device.

704: The access network device measures the sounding reference signal from the third network element, to obtain one or more measurement results.

A 5G system is used as an example. The sounding reference signal sent by the third network element may be an SRS (sounding reference signal).

In step 704, the access network device measures the sounding reference signal sent by the third network element, to obtain the one or more measurement results, where there is a correspondence between the one or more measurement results and location information of the third network element. In an example, the third network element sends a sounding reference signal at a location 1, the access network device obtains a measurement result 1 by measuring the sounding reference signal, and the measurement result 1 corresponds to the location 1. The third network element sends a sounding reference signal at a location 2, the access network device obtains a measurement result 2 by measuring the sounding reference signal, and the measurement result 2 corresponds to the location 2. Optionally, in another example, an absolute location of the third network element does not change, but an ambient environment of the third network element changes at different time. The access network device measures the sounding reference signal sent by the third network element at different time, and an obtained measurement result may also change. For example, a measurement result 1 obtained by the access network device at time 1 corresponds to a location 1 of the third network element, and a measurement result 2 obtained at time 2 corresponds to a location 1 of the third network element. Optionally, in still another example, there may be a plurality of third network elements in this embodiment. The access network device separately measures sounding reference signals from the plurality of third network elements, to obtain a plurality of measurement results. In other words, each measurement result in the plurality of measurement results corresponds to a location of one third network element in the plurality of third network elements. Correspondingly, in step 705, the plurality of third network elements separately provide respective location information for the access network device or the positioning device.

705: The third network element provides the location information of the third network element.

In this embodiment, one third network element is used as an example for description. One piece of location information corresponds to one or more measurement results obtained by the one or more access network devices by measuring one or more sounding reference signals sent by the third network element at a location corresponding to the location information. In an uplink positioning scenario, candidate training data of the AI model is the one or more measurement results and the location information of the third network element corresponding to the one or more measurement results. When the one or more access network devices determine that the collected candidate training data (that is, the one or more measurement results) is valid, the one or more access network devices separately provide the valid candidate training data for the positioning device.

Optionally, the location information of the third network element corresponding to the valid candidate training data may be provided by the third network element for the positioning device via at least one of the one or more access network devices, as shown in step 705a. It should be understood that 705a is an implementation of step 705. The location information of the third network element may be visible or invisible to the at least one access network device.

Optionally, in an implementation, the third network element directly provides location information (not shown in the figure) of a subframe to the positioning device. The positioning device obtains the valid candidate training data from one or more access network devices and the location information corresponding to the valid candidate training data. It should be understood that there are a plurality of pieces of valid candidate training data, and there are also a plurality of pieces of location information of the third network element. The positioning device determines a correspondence between valid candidate training data and location information. The positioning device uses the location information as a label of the AI model, and trains or updates the AI model, that is, training in a new creation process or training in an update process. It should be understood that, in this embodiment, the valid candidate training data (that is, first training data) of the AI model obtained by the positioning device includes: one or more measurement results that are in measurement results obtained by the access network device by measuring the sounding reference signal sent by the third network element and that meet a constraint, and location information that is of the third network element and that corresponds to each measurement result. The location information of the third network element is an output truth value, that is, a label, of the AI model.

706: The access network device determines validity of the collected candidate training data based on the first information.

It should be noted that in step 706, the access network device specifically determines validity of the measurement result in the candidate training data.

For example, in the application scenario 2, the quality indicator of the measurement result may include but is not limited to one or more of first-path power, a first-path arrival delay, a timing error group (timing error group, TEG), average power of a time-domain sampling point, a phase difference between antenna ports, an equivalent SINR of a full band or a subband, interference level information of the full band or the subband, a line-of-sight (line of light, LOS) probability, indication information of an inter-site synchronization error, or indication information of measurement result confidence. This is not limited. In addition, in a positioning application scenario, a quality indicator of a label may be a distance between locations of different samples.

For example, the quality indicator in the constraint may be an SINR and an amount of the training data. In an example, a threshold of the amount of the training data is N, and N may be an integer multiple of a batch or a minimum amount of training data required for AI model convergence. Optionally, in the uplink positioning scenario, the candidate training data of the AI model collected by the access network device further includes a label, and the label is the location information. For example, the quality indicator in the constraint may further include a quality indicator of the label. For example, the quality indicator of the label may be a distance between locations of different samples. This is not limited herein.

For validity determining, refer to the descriptions of step 504. Details are not described herein again.

707: The access network device sends second information to the positioning device based on a determining result of the validity of the candidate training data, where the second information indicates the determining result of the validity.

For example, the second information may be included in an interface message between the access network device and the positioning device. Alternatively, the access network device sends an interface message to the positioning device, where the interface message includes the second information.

708: The positioning device determines, based on the second information, whether the candidate training data collected by the access network device is valid.

In a possible case, the second information indicates that the candidate training data collected by the access network device is valid. In this case, the positioning device obtains the valid candidate training data (namely, the first training data) collected by the access network device. Herein, the first training data specifically includes the one or more measurement results that meet the constraint and the location information that is of the third network element and that corresponds to each of the one or more measurement results. Further, the positioning device trains or updates the AI model based on the valid candidate training data, as shown in step 709.

709: The positioning device trains the AI model, to obtain the AI model or update the AI model.

In another possible case, the second information indicates that the candidate training data collected by the access network device is invalid. In a possible implementation of this case, the positioning device maintains the original AI model, or switches to a non-AI model, as shown in step 710.

710: The positioning device performs uplink positioning based on the original AI model or by switching to the non-AI model.

Optionally, in another possible case, the second information indicates that the candidate training data collected by the access network device is invalid. In another possible implementation, the positioning device determines to re-collect training data of the AI model. In this case, step 711 and step 712 are further included.

711: The positioning device determines to re-collect training data.

712: The positioning device sends third information to the access network device, where the third information indicates the access network device to re-collect training data of the AI model.

Optionally, the third information further indicates a maximum quantity k of times of validity determining, where k is a positive integer. Optionally, the maximum quantity k of times of validity determining may alternatively be indicated by the first information. For details, refer to related descriptions in the procedure shown in FIG. 3. Details are not described again.

In this application scenario, in an example, the maximum quantity k of times of validity determining may be configured by the positioning device based on urgency of a requirement for the training data of the AI model. This is similar to that in the application scenario 1. In an example, a determining criterion of the urgency may be determined based on a result error of estimating a location of the third network element by the current AI model or an interval from a time point of last update of the AI model to a current time point. For example, if an error of a result of estimating the location of the third network element by the positioning device based on the current AI model is large, for example, greater than or equal to a specified threshold, it may be determined that the requirement is urgent. In this case, the maximum quantity k of times of validity determining may be set to a large value. On the contrary, if an error of a result of estimating the location of the third network element based on the current AI model is small, for example, less than a specified threshold, it may be determined that the requirement is not urgent. In this case, the maximum quantity k of times of validity determining may be set to a small value. The error of the result of estimating the AI model is determined by splitting training data collected in previous AI model training into a training set and a validation set. Because an error of the training set is already very low, an error of an estimation result of the validation set is used as a determining criterion of whether the AI model severely becomes invalid. In addition, the determining criterion may also be set based on an interval from a time point of last update of the AI model to a current time point. For details, refer to the explanation in the application scenario 1. Details are not described again.

Optionally, when determining to re-collect the training data of the AI model, the positioning device may indicate the access network device to update an air interface transmission configuration used by the access network device to collect the training data, as shown in step 713.

713: The access network device sends air interface transmission configuration information (for example, air interface transmission configuration information #2) to a third network element, where the air interface transmission configuration information indicates an updated air interface transmission configuration.

It should be understood that the update of the air interface transmission configuration in step 713 is update relative to the air interface transmission configuration in step 703. For example, the update includes but is not limited to an increase in transmit power of the sounding reference signal, an increase in a frequency domain density of the sounding reference signal, and the like. It should be understood that, a purpose of updating the air interface transmission configuration is that the access network device attempts to collect candidate training data that meets the constraint and provides the candidate training data for the positioning device.

714: The access network device re-collects training data of the AI model.

It can be learned that the method for obtaining training data in AI model training provided in this application is applied to the AI model-based uplink positioning scenario, so that a waste of air interface resources in an AI model training procedure can be reduced. In addition, the access network device sends invalid training data to the positioning device, which causes pollution to a training dataset of the AI model, thereby affecting training or update of the AI model and causing inaccurate gain evaluation. This solution avoids the foregoing impact.

It should be understood that in the uplink positioning scenario, the access network device is an example of a training data collection network element, and the positioning device is an example of an AI model training network element.

2. Application in downlink positioning

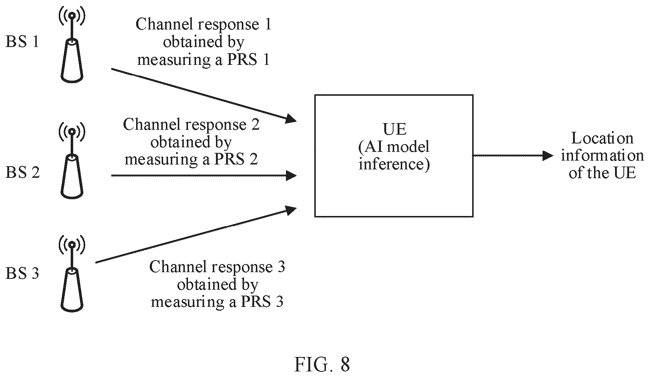

Refer to FIG. 8. FIG. 8 is a diagram of a technical solution in an AI model-based downlink scenario according to this application. As shown in FIG. 8, in downlink positioning, AI model inference is deployed on a UE side, but AI model training is deployed on a positioning device, for example, an LMF network element, on a network side. An AI model deployed on the positioning device uses a corresponding channel response obtained by the UE by measuring a reference signal as an input, and uses a location of the UE as an output. A 5G system is used as an example. The reference signal may be a positioning reference signal, and may be sent by one or more base stations (base stations, BSs) to the UE.

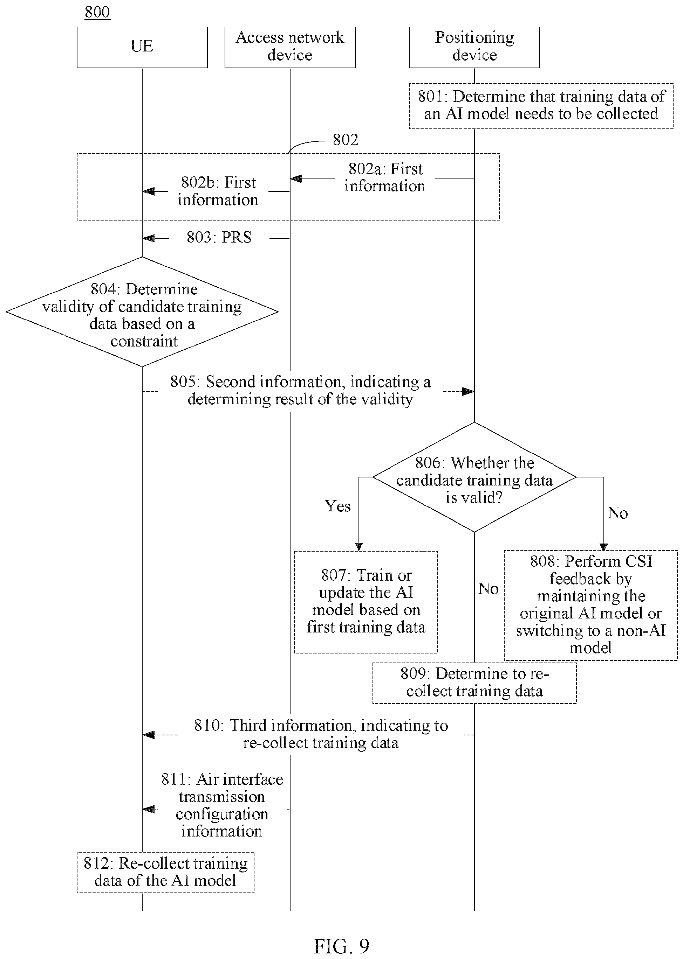

Refer to FIG. 9. FIG. 9 is an example of obtaining training data in AI model-based uplink positioning according to this application.

801: Optionally, a positioning device determines that training data of an AI model needs to be collected.

The training data of the AI model may come from measurement performed by one UE on a plurality of reference signals, or measurement performed by each of a plurality of UEs on one or more reference signals. The plurality of reference signals may be from one or more access network devices. This embodiment is described from a perspective of communication between the positioning device and the UE or a specific UE in the one or more UEs.

802: The positioning device sends first information to a UE, where the first information is for determining validity of candidate training data collected by the UE. Optionally, a determining result of the validity may be valid or invalid.

Optionally, in an example, the positioning device sends the first information to the UE via the access network device, as shown in step 802a and step 802b in FIG. 9. In another example, the positioning device may alternatively directly send the first information to the UE through an interface between the positioning device and the UE. The positioning device sends information #1 to the access network device, where the information #1 indicates the access network device to send a positioning reference signal to the UE. Optionally, the information #1 may alternatively be the first information. The access network device sends the positioning reference signal to the UE based on triggering of the information #1. The implementation shown in FIG. 9 is merely an example.

803: The access network device sends the positioning reference signal to the UE.

The UE measures a positioning reference signal from the access network device or from the access network device and another access network device, to obtain candidate training data, which is specifically one or more measurement results of the positioning reference signal and location information of the UE corresponding to the one or more measurement results.

It should be understood that, before sending the PRS to the UE, the access network device further sends air interface transmission configuration information of the PRS to the UE, to indicate an air interface transmission configuration of the PRS.

A 5G system is used as an example. The positioning reference signal sent by the access network device to the UE may be a PRS. The candidate training data is one or more measurement results obtained by the UE by measuring the PRS and location information of the UE corresponding to the one or more measurement results.

804: The UE determines validity of the collected candidate training data based on the first information.

For example, the UE determines the validity of the collected candidate training data based on a constraint indicated by the first information. Herein, specifically, the UE determines validity of the one or more measurement results. Similar to step 504, refer to step 504 for understanding. Detailed descriptions are omitted herein. In addition, for an example of a quality indicator included in the constraint in a downlink positioning scenario, refer to descriptions in the uplink positioning scenario. Details are not described herein again.

805: The UE sends second information to the positioning device, where the second information indicates the determining result of the validity.

In a possible case, the second information indicates that the candidate training data collected by the UE is valid. In an example, the second information may be first training data in the candidate training data collected by the UE. The first training data includes location information of the UE. Alternatively, the first training data is specifically a measurement result that meets the constraint and location information of the UE corresponding to the measurement result. In another possible case, the second information indicates that the candidate training data collected by the UE is invalid.

Optionally, in step 805, the UE may directly send the second information to the positioning device through an interface between the UE and the positioning device, as shown in FIG. 9. Alternatively, the UE may send the second information to the access network device, and then the access network device sends the second information to the positioning device. Alternatively, when the candidate training data collected by the UE is valid, the UE sends, to the access network device, some information included in the second information, for example, a measurement result (that is, a valid measurement result) that is included in the first training data and that meets the constraint, and sends the location information of the UE to the positioning device. Then, the access network device sends the measurement result that meets the constraint to the positioning device. Therefore, the positioning device obtains the first training data, where the first training data includes the valid measurement result and the location information of the UE corresponding to the valid measurement result. This is not limited.

806: The positioning device determines, based on the second information, whether collection of the candidate training data collected by the UE is valid.

In a possible case, the second information indicates that the candidate training data collected by the UE is valid. In this case, the second information may include the first training data, and the first training data includes the location information of the UE. Further, the positioning device trains or updates the AI model based on the first training data, as shown in step 807.

807: The positioning device trains the AI model, to obtain the AI model or update the AI model.

In another possible case, the second information indicates that the candidate training data collected by the UE is invalid. In a possible implementation of this case, the access network device maintains beam management of the original AI model, or switches to a non-AI model to perform downlink positioning, as shown in step 808.

808: The positioning device performs positioning by maintaining the original AI model or by switching to the non-AI model.

Optionally, in another possible case, the second information indicates that the candidate training data collected by the UE is invalid. In a possible implementation, the positioning device determines to re-collect training data, as shown in step 809.

809: The positioning device determines to re-collect training data.

810: The positioning device sends third information to the UE, where the third information indicates the UE to re-collect training data of the AI model.

Optionally, the third information may further indicate a maximum quantity k of times of validity determining. Alternatively, the first information indicates a maximum quantity k of times of validity determining.

Optionally, when the training data of the AI model is re-collected, the positioning device may indicate the access network device to update an air interface transmission configuration. For example, the positioning device sends information #2 to the access network device, where the information #2 indicates the access network device to re-collect training data. Correspondingly, the access network device sends air interface transmission configuration information corresponding to an updated air interface transmission configuration to the UE, as shown in step 811.

811: The access network device sends the air interface transmission configuration information to the UE, where the air interface transmission configuration information indicates the updated air interface transmission configuration.

The UE measures, based on the updated air interface transmission configuration, the positioning reference signal sent by the access network device, to re-collect training data of the AI model.

812: The UE re-collects training data of the AI model.

Optionally, the UE in this embodiment may be a location reference device, or may be an ordinary UE. This is not limited. For the location reference device or the ordinary UE, refer to the descriptions in step 703. Details are not described again.

In addition, it should be understood that the UE in this embodiment is an example of a training data collection network element, and the positioning device is an example of an AI model training network element.

It can be learned that the method for obtaining training data in AI model training provided in this application is applied to the AI model-based downlink positioning scenario, so that a waste of air interface resources in an AI model training procedure can be reduced. In addition, a terminal device (for example, the location reference device) sends invalid training data to the positioning device, which causes pollution to a training dataset of the AI model, thereby affecting training or update of the AI model and causing inaccurate gain evaluation. This solution avoids the foregoing impact.

Application scenario 3

AI model-based beam management

For example, AI model training in the application scenario 3 is deployed on an access network device side. An access network device needs to obtain training data (for example, one or more measurement results of a reference signal) obtained by a UE side by measuring the reference signal, and use the training data obtained from the UE side for AI model training or update. In this application scenario, a label of the AI model is reference signal information corresponding to K optimal measurement results. Alternatively, in the application scenario 3, the reference signal information corresponds to the K optimal measurement results may be replaced with information that is about K beams and that corresponds to the K optimal measurement results, for example, IDs of the K beams.

It can be learned that, in a 5G system, a high frequency band above 6 GHz is introduced for data communication. Compared with medium and low frequency bands below 6 GHz, continuous available bandwidth of a high frequency band spectrum is larger, and a center frequency is higher. Therefore, a larger transmission rate and a larger system capacity can be obtained. However, because a penetration capability of a high-frequency signal (for example, a millimeter wave) is weak and a path fading effect is strong, a propagation distance of the high-frequency signal is limited, and a coverage capability is poor. Thanks to a large-scale antenna technology, a high-frequency communication system usually uses a large quantity of antennas for beamforming, so that a definite beam gain can be obtained to compensate for the limited propagation distance caused by the high-frequency propagation characteristic. However, when accurate beamforming is designed, a base station needs to obtain accurate channel information from a terminal. To obtain channel information on such a large-scale antenna array, a large quantity of air interface overheads need to be consumed, which is unacceptable in an actual system. **In** experiments, it is found that a high-frequency radio channel has definite sparseness, that is, main energy of the channel is concentrated on a limited quantity of paths. For example, when a direct line-of-sight (line of sight, LoS) path without an obstacle exists between a transmitter and a receiver of a signal, main energy between the receiver and the transmitter is concentrated on the direct line-of-sight path. When there is a non-line-of-sight (non-line of sight, NLOS) obstacle between the transmitter and the receiver, the main energy is concentrated on a path that can be reached through one reflection. Usually, each path has a different incident angle and an emergent angle. Therefore, a transmitter and a receiver in a high-frequency communication system only need to align their beam directions with an incident angle and an emergent angle of a main path of a channel, to obtain most channel transmission energy to complete communication.

For a high-frequency communication system, it is assumed that a transmitter has S antennas in total, and a receiver has R antennas, and a form of the antennas may include a linear antenna or a planar array antenna. The transmitter and the receiver perform multiplication on antennas of the transmitter and the receiver using different precoding weights, and precode the transmitted signals, so that the transmitted signals have a beamforming effect. For example, for a downlink signal transmission model:

$$Y = VHWX + N$$

A receiving precoding matrix of the receiver is V, and a channel response is H. A transmitting precoding matrix of the transmitter is W, a transmitted signal is X, and noise is N. A signal received by the receiver is Y. A form of the transmitting precoding matrix of the transmitter is $W = [W_1, W_2, ... W_M]$, where $W_i$ is a precoding weight of an $i^{th}$ antenna of the transmitter. Similarly, a form of the receiving precoding matrix of the receiver is $V = [V_1, V_2, ... V_R]$, where $V_i$ is a precoding weight of an $i^{th}$ antenna of the receiver. A signal obtained by precoding the transmitted signal X by using W is WX, where WX is a final transmitter signal of the transmitter. WX has a beamforming effect in space. WX may be classified into a reference signal and a data signal depending on a difference between information carried on X. Usually, a reference signal is sent in a beam management process. Possible types of the reference signal include an SSB, a CSI-RS, an SRS, a phase-tracking reference signal (phase-tracking reference signal, PTRS), a demodulation reference signal (demodulation reference signal, DMRS), and the like.

Because an angle of a main path of a channel may be within a wide range, for example, 0 to 360 degrees, and each precoding matrix W can cover only a specific angle range in space and corresponds to one beamformed beam, a plurality of precoding matrices W need to be designed to ensure a good signal coverage effect. A plurality of precoding matrices W with different pointing angles form one codebook. Both the transmitter and the receiver maintain their own codebooks. In a beam management process, the transmitter and the receiver implement angle alignment between the transmitter and the receiver by traversing and scanning their own codebooks. For example, the codebook of the transmitter includes 64 precoding matrices that correspond to 64 beamformed beams. The codebook of the receiver includes four precoding matrices that correspond to four beamformed beams. Therefore, a total of 256 (64*4) scanning times are required to determine a pair of optimal beamformed beams of the receiver and the transmitter, and scanning overheads and a delay are very large.

In a beam management technology based on an AI model, sparse beam scanning can be implemented, and overheads and a delay of beam scanning can be greatly reduced. For a high-frequency communication system, it is assumed that a transmitter has S antennas in total, a receiver has R antennas, a codebook of the transmitter has S precoding matrices (S beamformed beams), and a codebook of the receiver has R precoding matrices (R beamformed beams). For each receive beamformed beam, any transmit beamformed beam may form a transmit/receive beam pair with the receive beamformed beam. Therefore, a process of determining an optimal receive/transmit beam pair may be split into: For a receive beam, transmitter beam scanning is performed to determine a matched optimal transmit beam, and then this process is repeated for remaining R-1 receive beams to determine a globally optimal transmit/receive beam pair. Similarly, for each transmit beam, any receive beam may form a transmit/receive beam pair with the transmit beam. Therefore, a process of determining an optimal transmit/receive beam pair may be split into: For a transmit beam, receiver beam scanning is performed to determine a matched optimal transmit beam, and then this process is repeated for remaining S-1 transmit beams, to determine a globally optimal transmit/receive beam pair. Therefore, the following uses transmitter beam scanning as an example for description.

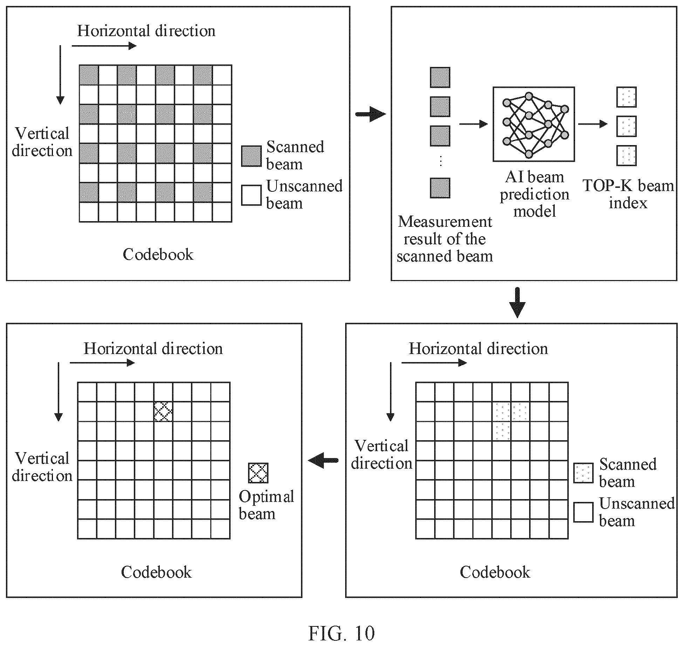

Refer to FIG. 10. FIG. 10 is a diagram of an AI-assisted sparse beam scanning process.

It is assumed that a precoding matrix in a codebook of a transmitter corresponds to first-value, for example, 64, beamformed beams. In a conventional solution, all 64 beams need to be scanned to determine an optimal beam. However, in an AI-assisted (that is, AI-model-based) sparse beam scanning solution, only some beams in the codebook need to be scanned, for example, second-value beams, for example, 16 beams, filled with marks in FIG. 10. There may be many methods for selecting some beams from the codebook for scanning, and each selected beam combination is referred to as a sparse beam pattern. The transmitter performs precoding by using a precoding matrix in the sparse beam pattern, and sends a reference signal. The receiver inputs a measurement result of the reference signal into a neural network for AI beam prediction, and the neural network outputs indexes of K beams, which are also referred to as indexes of Top-K beams. It should be noted that the K beams are K of all the 64 beamformed beams in the codebook, and are not limited to K of beamformed beams included in the sparse beam pattern. The receiver feeds back the indexes of the Top-K beams to the transmitter. Optionally, when K>1, the transmitter scans only the K beamformed beams, and transmits beamformed reference signals. The receiver measures energy of the K reference signals by using an energy detection method, and selects a beam with strongest energy as the optimal beam.

The following describes application of the method for obtaining training data in AI model training provided in this application to beam management based on a sparse beam scanning technology. In this application, the transmitter is an access network device, for example, a base station. The receiver is a UE. The UE measures a reference signal from the access network device, obtains a plurality of measurement results, determines TOP-K beam indexes, and feeds back the plurality of measurement results and the TOP-K beam indexes to the access network device.

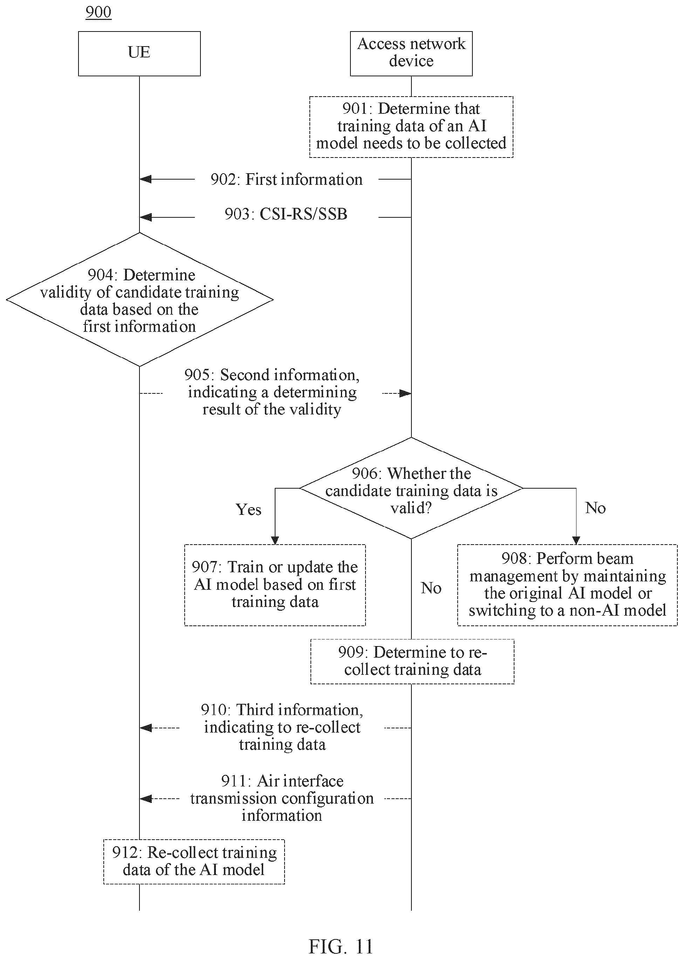

Refer to FIG. 11. FIG. 11 is an example of obtaining training data in AI model-based beam management according to this application.

901: Optionally, an access network device determines that training data of an AI model needs to be collected.

902: The access network device sends first information to a UE, where the first information is for determining validity of candidate training data collected by the UE. Optionally, a determining result of the validity may be valid or invalid.

903: The access network device sends a plurality of reference signals to the UE.

The UE measures the plurality of reference signals from the access network device, to obtain a plurality of measurement results, namely, candidate training data. Optionally, the plurality of reference signals correspond to the foregoing first-value, for example, 64, beamformed beams.

Optionally, in the application scenario 3, the reference signal may be a CSI-RS and/or an SSB. In this example, the CSI-RS and/or the SSB are/is used by the UE to perform channel measurement.

904: The UE determines the validity of the collected candidate training data based on the first information.

905: The UE sends second information to the access network device, where the second information indicates the determining result of the validity.

In a possible case, the second information indicates that the candidate training data collected by the UE is valid. In an example, the second information may be first training data, where the first training data includes reference signal information corresponding to K optimal measurement results in the one or more measurement results, and K is an integer greater than or equal to 1. For example, the reference signal information corresponding to the K optimal measurement results may be understood as the indexes of the TOP-K beams in FIG. 10. In another example, the second information may be first training data, where the first training data includes L measurement results in the plurality of measurement results and information about L reference signals corresponding to the L measurement results. The L measurement results are valid measurement results, that is, measurement results that meet a constraint. In another possible case, the second information indicates that the candidate training data collected by the UE is invalid.

In this application scenario, the reference signal may also be replaced with a "beam". This is not limited.

906: The access network device determines, based on the second information, whether the candidate training data collected by the UE is valid.

In a possible case, the second information indicates that the candidate training data collected by the UE is valid. In this case, the access network device obtains the first training data from the UE. Further, the access network device trains or updates the AI model based on the first training data, as shown in step 907.

907: The access network device trains the AI model based on the first training data, to obtain the AI model or update the AI model.

In another possible case, the second information indicates that the candidate training data collected by the UE is invalid. In a possible implementation of this case, the access network device maintains beam management of the original AI model, or switches to a non-AI model to perform beam management, as shown in step 908.

908: The access network device maintains the original AI model unchanged, or switches to a non-AI model to perform beam management.

Optionally, in another possible case, the second information indicates that the candidate training data collected by the UE is invalid. In a possible implementation, the access network device determines to re-collect training data, as shown in step 909.

909: The access network device determines to re-collect training data.

910: The access network device sends third information to the UE, where the third information indicates the UE to re-collect training data of the AI model.

Optionally, the third information further indicates a maximum quantity k of times of validity determining. Alternatively, the maximum quantity k of times of validity determining may also be indicated by the first information. This is not limited.

Optionally, when the training data of the AI model is re-collected, the access network device may update an air interface transmission configuration. Correspondingly, the UE re-collects candidate training data of the AI model based on the updated air interface transmission configuration.

911: The access network device sends air interface transmission configuration information to the UE, where the air interface transmission configuration information indicates the updated air interface transmission configuration.

912: The UE re-collects training data of the AI model.

Similar to the foregoing two application scenarios, in a process of re-collecting candidate training data, the UE is limited by the maximum quantity k of times of validity determining. Optionally, the maximum quantity k of times of validity determining may be determined by the access network device based on urgency of training data collection. For example, a determining criterion of the urgency may be a time period from last update of the AI model to a current time point, or may be set by the access network device based on a current AI model for an error of a result of estimating an optimal measurement result (or an optimal beam). The error of the result of estimating the AI model is determined by splitting training data collected in previous AI model training into a training set and a validation set. Because an error of the training set is already very low, an error of an estimation result of the validation set is used as a determining criterion of whether the AI model severely becomes invalid. For example, if an error of a result of predicting, by the access network device based on the current AI model, information about a reference signal corresponding to an optimal measurement result when the UE receives the reference signal, with a large error, for example, greater than or equal to a specified threshold, it may be determined that a requirement is urgent. In this case, the maximum quantity k of times of validity determining may be set to a large value. On the contrary, if an error of a result of predicting, based on the current AI model, information about a reference signal corresponding to an optimal measurement result when the UE receives the reference signal is small, for example, less than a specified threshold, it may be determined that a requirement is not urgent. In this case, the maximum quantity k of times of validity determining may be set to a small value. In addition, the determining criterion may also be set based on an interval from a time point of last update of the AI model to a current time point. For details, refer to the explanation in the application scenario 1. Details are not described again.

It can be learned that the method for obtaining training data in AI model training provided in this application is applied to the AI model-based beam management scenario, so that a waste of air interface resources in an AI model training procedure can be reduced. In addition, this solution avoids pollution to a training dataset of the AI model caused by the UE by sending invalid training data to the access network device.

In the diagrams of the method procedures in FIG. 3 to FIG. 11, sequence numbers of the steps are merely intended to clearly describe the technical solutions of this application, and should not constitute a limitation on specific implementation of the methods. These steps may be extended to more steps, or may be combined into fewer steps, depending on different specific implementation. This is not limited. In addition, steps shown by dashed lines in FIG. 3 to FIG. 11 are optional steps.

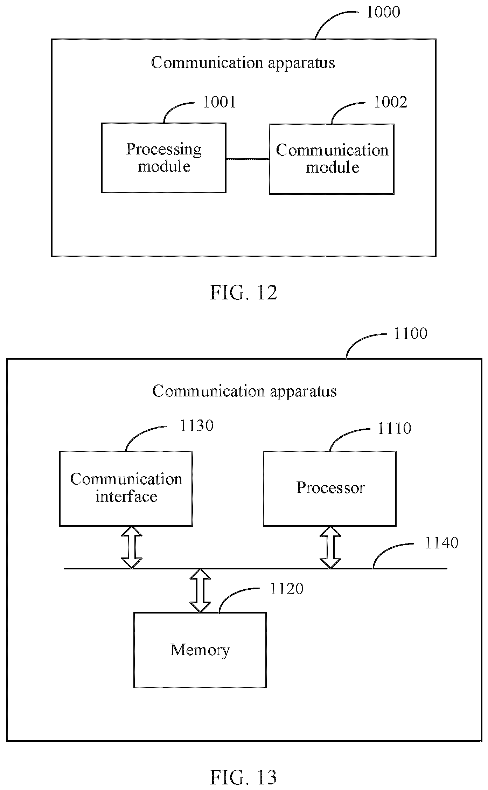

The foregoing describes in detail the method for obtaining training data in AI model training provided in this application. Based on a same technical concept, refer to FIG. 12. This application provides a communication apparatus 1000.

As shown in FIG. 12, the communication apparatus 1000 includes a processing module 1001 and a communication module 1002. The communication apparatus 1000 may be a terminal device, or may be a communication apparatus, for example, a chip or a circuit, that is used in the terminal device or used by matching with the terminal device and that can implement a communication method performed on a terminal device side. Alternatively, the communication apparatus 1000 may be a network device, or may be a communication apparatus, for example, a chip or a circuit, that is used in network device side or used by matching with a network device side and that can implement a communication method performed on the network device side. For example, the network device side may be, for example, the access network device or the positioning device in the method embodiments of this application.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device side or the network device side in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement a processing function of the terminal device in the embodiments in FIG. 3 to FIG. 11, and the communication module 1002 may be configured to implement receiving and sending functions of the terminal device in the embodiments in FIG. 3 to FIG. 11. Alternatively, the communication apparatus may be understood with reference to the third aspect and the possible designs in the third aspect in the summary.

When the communication apparatus 1000 is used in a network device, the processing module 1001 may be configured to implement a processing function of the network device (for example, the access network device or the positioning device) in the embodiments in FIG. 3 to FIG. 11, and the communication module 1002 may be configured to implement receiving and sending functions of the network device in the embodiments in FIG. 3 to FIG. 11. Alternatively, the communication apparatus may be understood with reference to the fourth aspect and the possible designs in the fourth aspect in the summary.

It should be noted that the first network element or the second network element shown in FIG. 3 is specifically a terminal device or a network device (for example, an access network device or a positioning device) and is described in detail in the foregoing method embodiments for various different application scenarios. That the first network element is a terminal device or a network device may be understood with reference to a specific embodiment. Details are not described herein again.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this application is an example, is merely division into logical functions, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

Based on a same technical concept, refer to FIG. 13. This application further provides a communication apparatus 1100. Optionally, the communication apparatus 1100 may be a chip or a chip system. Optionally, in this application, the chip system may include a chip, or may include a chip and another discrete component.

The communication apparatus 1100 may be configured to implement a function of any network element in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120, to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 13, the processor 1110, the memory 1120, and the communication interface 1130 are connected to each other by using a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 13, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

In a possible implementation, the communication apparatus 1100 may be used on a network device side, for example, the access network device or the positioning device in embodiments of this application. Specifically, the communication apparatus 1100 may be a network device, or may be an apparatus that can support the network device in implementing a corresponding function on a network device side in any one of the foregoing examples. The memory 1120 stores a computer program (or instructions) and/or data for implementing the functions of the network device side in any one of the foregoing examples. The processor 1110 may execute the computer program stored in the memory 1120, to complete the method performed by the network device side in any one of the foregoing examples. When the communication apparatus is used in an access network device, the communication interface in the communication apparatus 1100 may be configured to interact with a terminal device, to send information to the terminal device or receive information from the terminal device. In addition, optionally, the communication interface in the communication apparatus 1100 may be further configured to interact with a core network device, for example, interact with a positioning device (for example, an LMF network element), to send information to the positioning device or receive information from the positioning device.

In another possible implementation, the communication apparatus 1100 may be used in a terminal device. Specifically, the communication apparatus 1100 may be a terminal device, or may be an apparatus that can support the terminal device in implementing a function of the terminal device in any one of the foregoing examples. The memory 1120 stores a computer program (or instructions) and/or data for implementing the functions of the terminal device in any one of the foregoing examples. The processor 1110 may execute the computer program stored in the memory 1120, to complete the method performed by the terminal device in any one of the foregoing examples. When the communication apparatus is used in a terminal device, the communication interface in the communication apparatus 1100 may be configured to interact with a network device side (for example, an access network device), and send information to the network device side or receive information from the access network device.

The communication apparatus 1100 provided in this example may be used on a network device side (for example, an access network device or a positioning device) to complete the method performed by the network device side, or may be used in a terminal device to complete the method performed by the terminal device. Therefore, for technical effects that can be achieved by this embodiment, refer to the foregoing method embodiments. Details are not described herein again.

Based on the foregoing examples, this application provides a communication system, including a network device and a terminal device. In an example, the communication system includes an access network device and a terminal device. In another example, the communication system includes a positioning device, an access network device, and a terminal device. The access network device and the terminal device, or the positioning device, the access network device, and the terminal device may implement the communication methods provided in the examples shown in FIG. 3 to FIG. 11.

All or some of the technical solutions provided in this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, a terminal device, an access network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely schematic. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for obtaining training data in artificial intelligence AI model training, wherein the method is performed by a first network element or a chip used in the first network element, and the method comprises:

   receiving first information from a second network element, wherein the first information is for determining validity of collected candidate training data, and a determining result of the validity comprises valid or invalid;

collecting candidate training data of an AI model; and

sending second information to the second network element based on the candidate training data and the first information, wherein the second information indicates the determining result of the validity.

2. The method according to claim 1, wherein the second information comprises first training data, the second information indicates that the collected candidate training data is valid, and the first training data is valid data in the candidate training data.

3. The method according to claim 1, wherein the second information indicates that the collected candidate training data is invalid.

4. The method according to any one of claims 1 to 3, wherein the first information is for determining a constraint for determining the validity of the collected candidate training data.

5. The method according to claim 4, wherein the method further comprises:

if it is determined that the candidate training data comprises the first training data that meets the constraint, determining that the candidate training data is valid; or

if it is determined that the candidate training data does not comprise the first training data that meets the constraint, determining that the candidate training data is invalid.

6. The method according to any one of claims 3 to 5, wherein when the collected candidate training data is invalid, the method further comprises:

receiving third information from the second network element, wherein the third information indicates to re-collect candidate training data of the AI model.

7. The method according to claim 6, wherein the method further comprises:

determining air interface transmission configuration information, wherein the air interface transmission configuration information corresponds to an updated air interface transmission configuration, and the air interface transmission configuration information indicates to collect the candidate training data of the AI model based on the updated air interface transmission configuration, wherein

information about the updated air interface transmission configuration comprises one or more of the following updates:

transmit power of a reference signal;

a quantity of antenna ports used for a reference signal;

bandwidth of a reference signal;

a frequency domain density of a reference signal; or

a period of a reference signal.

8. The method according to claim 6 or 7, wherein the third information further indicates a maximum quantity k of times of determining the validity, wherein k is a positive integer.

9. The method according to claim 6 or 7, wherein the first information further indicates a maximum quantity k of times of determining the validity, wherein k is a positive integer.

10. The method according to claim 8 or 9, wherein the method further comprises:

collecting the candidate training data of the AI model based on the updated air interface transmission configuration; and

if the maximum quantity k of times of determining the validity is reached, and it is determined, based on the first information, that a result of a $k^{th}$ time of validity determining is invalid, stopping collecting the candidate training data of the AI model.

11. The method according to claim 10, wherein the method further comprises:

before the maximum quantity k of times of determining the validity is exceeded, if it is determined, based on the first information, that a result of a $j^{th}$ time of validity determining is valid, sending fourth information to the second network element, wherein the fourth information comprises second training data, the fourth information indicates that the result of the $j^{th}$ time of validity determining is valid, the second training data comprises valid data in candidate training data for which the $j^{th}$ time of validity determining is performed, j is less than or equal to k, and j is a positive integer.

12. The method according to any one of claims 1 to 11, wherein the collecting the candidate training data of the AI model comprises:

measuring a reference signal from the second network element, to obtain one or more measurement results, wherein the candidate training data of the AI model comprises the one or more measurement results; or

measuring a reference signal from a third network element, to obtain one or more measurement results, wherein the candidate training data of the AI model comprises the one or more measurement results.

13. The method according to claim 12, wherein the first network element is a terminal device or a chip used in the terminal device, and the second network element is an access network device or a chip used in the access network device; and
the first network element measures the reference signal from the second network element, to obtain the one or more measurement results.

14. The method according to claim 13, wherein the first training data further comprises reference signal information or beam information corresponding to K optimal measurement results in the one or more measurement results, and K is an integer greater than or equal to 1.

15. The method according to claim 12, wherein the first network element is an access network device or a chip used in the access network device, and the second network element is a positioning device or a chip used in the positioning device;

the first network element measures a sounding reference signal from the third network element, to obtain the one or more measurement results; and
the first training data further comprises one or more pieces of location information of the third network element.

16. The method according to claim 12, wherein the first network element is a terminal device or a chip used in the terminal device, and the second network element is a positioning device or a chip used in the positioning device;

the first network element measures a positioning reference signal from the third network element, to obtain the one or more measurement results, wherein the third network element is an access network device; and
the first training data further comprises one or more pieces of location information of the first network element.

17. The method according to any one of claims 4 to 16, wherein the constraint comprises one or more of the following:

a threshold of a quality indicator and a determining criterion of the quality indicator;
an amount threshold of training data that meets a quality indicator determining criterion and a determining criterion of an amount of the training data; or

indication information of maximum duration of training data collection corresponding to a single time of validity determining.

18. The method according to any one of claims 4 to 17, wherein the first information indicates one or more of the following:

a threshold of a quality indicator;
a quality indicator determining criterion;
an amount threshold of training data that meets a quality indicator determining criterion;
a determining criterion of an amount of training data that meets a quality indicator determining criterion; or
maximum duration of candidate training data collection corresponding to a single time of validity determining.

19. The method according to any one of claims 4 to 18, wherein the constraint is based on an application scenario of the AI model, and the application scenario of the AI model comprises one or more of the following:
AI model-based CSI feedback or CSI prediction, AI model-based positioning, or AI model-based beam management.

20. A method for obtaining training data in AI model training, wherein the method is performed by a second network element or a chip used in the second network element, and the method comprises:

sending first information to a first network element, wherein the first information is for determining validity of candidate training data that is of an AI model and that is collected by the first network element, and a determining result of the validity comprises valid or invalid; and
receiving second information from the first network element, wherein the second information indicates the determining result of the validity.

21. The method according to claim 20, wherein the second information comprises first training data, the second information indicates that the candidate training data collected by the first network element is valid, and the first training data is valid data in the candidate training data.

22. The method according to claim 20, wherein the second information indicates that the candidate training data collected by the first network element is invalid.

23. The method according to any one of claims 20 to 22, wherein the first information is for determining a constraint for determining the validity of the candidate training data collected by the first network element.

24. The method according to claim 23, wherein if the candidate training data comprises the first training data that meets the constraint, the candidate training data is valid; or
if the candidate training data does not comprise the first training data that meets the constraint, the candidate training data is invalid.

25. The method according to any one of claims 22 to 24, wherein when the second information indicates that the candidate training data collected by the first network element is invalid, the method further comprises:
sending third information to the first network element, wherein the third information indicates the first network element to re-collect candidate training data of the AI model.

26. The method according to claim 25, wherein the method further comprises:

determining air interface transmission configuration information, wherein the air interface transmission configuration information corresponds to an updated air interface transmission configuration, and the air interface transmission configuration information indicates the first network element to collect the candidate training data of the AI model based on the updated air interface transmission configuration, wherein information about the updated air interface transmission configuration comprises one or more of the following updates:

transmit power of a reference signal;
a quantity of antenna ports used for a reference signal;
bandwidth of a reference signal;
a frequency domain density of a reference signal; or
a period of a reference signal.

27. The method according to claim 25 or 26, wherein the third information further indicates a maximum quantity k of times of determining the validity, wherein k is a positive integer.

28. The method according to claim 25 or 26, wherein the first information further indicates a maximum quantity k of times of determining the validity, wherein k is a positive integer.

29. The method according to claim 27 or 28, wherein the method further comprises:
receiving fourth information from the first network element, wherein the fourth information comprises second training data, the fourth information indicates that a determining result of a $j^{th}$ time of validity determining performed by the first network element is valid, the second training data is valid data in candidate training data for which the $j^{th}$ time of validity determining is performed, j is less than or equal to k, and j is a positive integer.

30. The method according to any one of claims 20 to 29, wherein the second network element is an access network device or a chip used in the access network device, the first network element is a terminal device or a chip used in the terminal device, and the method further comprises:
sending a reference signal to the first network element, wherein the reference signal is used by the first network element to obtain one or more measurement results corresponding to the reference signal, and the candidate training data of the AI model comprises the one or more measurement results.

31. The method according to claim 30, wherein the first training data further comprises a reference signal corresponding to K optimal measurement results in the one or more measurement results, and K is an integer greater than or equal to 1.

32. The method according to any one of claims 20 to 29, wherein the second network element is a positioning device or a chip used in the positioning device, the first network element is an access network device or a chip used in the access network device, the candidate training data of the AI model comprises one or more measurement results and location information of a third network element, and the one or more measurement results are obtained by the first network element by measuring a sounding reference signal sent by the third network element.

33. The method according to any one of claims 20 to 29, wherein the second network element is a positioning device or a chip used in the positioning device, the first network element is a terminal device or a chip used in the terminal device, the candidate training data of the AI model comprises one or more measurement results and location information of the first network element, the one or more measurement results are based on measurement of a positioning reference signal sent by a third network element, and the third network element is an access network device.

34. The method according to any one of claims 23 to 33, wherein the constraint comprises one or more of the following:

a threshold of a quality indicator and a determining criterion of the quality indicator;
an amount threshold of training data that meets a quality indicator determining criterion and a determining criterion of an amount of the training data; or
maximum duration of candidate training data collection corresponding to a single time of validity determining.

35. The method according to any one of claims 20 to 34, wherein the first information indicates one or more of the following:

a threshold of a quality indicator;
a quality indicator determining criterion;
an amount threshold of training data that meets a quality indicator determining criterion;
a determining criterion of an amount of training data that meets a quality indicator determining criterion; or
maximum duration of candidate training data collection corresponding to a single time of validity determining.

36. The method according to any one of claims 23 to 35, wherein the constraint is based on an application scenario of the AI model, and the application scenario of the AI model comprises one or more of the following:
AI model-based CSI feedback or CSI prediction, AI model-based positioning, or AI model-based beam management.

37. A communication apparatus, comprising a module configured to implement the method according to any one of claims 1 to 19, or a module configured to implement the method according to any one of claims 20 to 36.

38. A communication apparatus, comprising:
a processor, wherein the processor is coupled to a memory, and the processor is configured to invoke computer program instructions stored in the memory, to perform the method according to any one of claims 1 to 19, or perform the method according to any one of claims 20 to 36.

39. A communication apparatus, comprising a processor and a communication interface, wherein the communication interface is configured to receive data and/or information, and transmit the received data and/or information to the processor; the processor processes the data and/or the information; and the communication interface is further configured to output data and/or information processed by the processor, so that the communication apparatus performs the method according to any one of claims 1 to 19, or performs the method according to any one of claims 20 to 36.

40. A computer-readable storage medium, wherein the computer-readable storage medium stores instructions; and when the instructions are run on a computer, the computer is enabled to perform the method according to any one of claims 1 to 19 or the method according to any one of claims 20 to 36.

41. A computer program product, wherein the computer-readable storage medium stores instructions; and when the instructions are run on a computer, the computer is enabled to perform the method according to any one of claims 1 to 19 or the method according to any one of claims 20 to 36.

42. A communication system, comprising the communication apparatus according to any one of claims 37 to 39.

Input layer    Output layer

FIG. 1

(a)

(b)

FIG. 2

300

| First network element | | Second network element |

310: First information, for determining validity of candidate training data collected by the first network element

320: Collect candidate training data of an AI model

330: Second information, indicating a determining result of the validity

FIG. 3

CSI obtained through measurement → Encoder → Fed-back CSI → Decoder → Restored CSI

UE                    Base station

FIG. 4

500

```
┌─────────────┐                                      ┌─────────────┐
│     UE      │                                      │   Access    │
│             │                                      │network device│
└─────────────┘                                      └─────────────┘
```

501: Determine that training
data of an AI model needs to
be collected

502: First information

503: CSI-RS

504: Determine
validity of candidate
training data based on a
constraint

505: Second information,
indicating a determining
result of the validity

506: Whether
the candidate training data
is valid?

Yes                                                                No

507: Train or update the
AI model based on first
training data

No

508: Perform CSI
feedback by maintaining
the original AI model or
switching to a non-AI
model

509: Determine to re-
collect training data

510: Third information,
indicating to re-collect
training data

511: Air interface
transmission configuration
information

512: Re-collect training
data of the AI model

FIG. 5

41

BS 1

Channel response 1
obtained by
measuring an SRS 1

BS 2

Channel response 2
obtained by
measuring an SRS 2

Positioning device
(for example, an
LMF)

Location
information
of a UE

BS 3

Channel response 3
obtained by
measuring an SRS 3

FIG. 6

700

| Third network element | Access network device | | Positioning device |

701: Determine that training data of an AI model needs to be collected

702: First information

703: Air interface transmission configuration information #1

704: SRS

705

705a: Location information of the third network element

706: Determine validity of candidate training data based on a constraint

707: Second information, indicating a determining result of the validity

708: Whether the candidate training data is valid?

Yes

No

709: Train or update the AI model based on first training data

710: Perform positioning by maintaining the original AI model or switching to a non-AI model

No

711: Determine to re-collect training data

712: Third information, indicating to re-collect training data

713: Air interface transmission configuration information #2

714: Re-collect training data of the AI model

FIG. 7

FIG. 8

800

UE | Access network device | Positioning device

801: Determine that training data of an AI model needs to be collected

802

802b: First information ← 802a: First information

803: PRS

804: Determine validity of candidate training data based on a constraint

805: Second information, indicating a determining result of the validity

806: Whether the candidate training data is valid?

Yes — No

807: Train or update the AI model based on first training data

No

808: Perform CSI feedback by maintaining the original AI model or switching to a non-AI model

809: Determine to re-collect training data

810: Third information, indicating to re-collect training data

811: Air interface transmission configuration information

812: Re-collect training data of the AI model

FIG. 9

FIG. 10

900

UE

Access network device

901: Determine that training data of an AI model needs to be collected

902: First information

903: CSI-RS/SSB

904: Determine validity of candidate training data based on the first information

905: Second information, indicating a determining result of the validity

906: Whether the candidate training data is valid?

Yes

No

907: Train or update the AI model based on first training data

908: Perform beam management by maintaining the original AI model or switching to a non-AI model

No

909: Determine to re-collect training data

910: Third information, indicating to re-collect training data

911: Air interface transmission configuration information

912: Re-collect training data of the AI model

FIG. 11

1000

Communication apparatus

1001

Processing module

1002

Communication module

FIG. 12

1100

Communication apparatus

1130

Communication interface

1110

Processor

1140

1120

Memory

FIG. 13

## INTERNATIONAL SEARCH REPORT

| International application No. |
| --- |
| **PCT/CN2023/119343** |

| A. | CLASSIFICATION OF SUBJECT MATTER |
| --- | --- |

H04W 24/06(2009.01)i

According to International Patent Classification (IPC) or to both national classification and IPC

| B. | FIELDS SEARCHED |
| --- | --- |

Minimum documentation searched (classification system followed by classification symbols)

IPC:H04W,G06N

Documentation searched other than minimum documentation to the extent that such documents are included in the fields searched

Electronic data base consulted during the international search (name of data base and, where practicable, search terms used)

3GPP, CNTXT, ENTXTC, DWPI: AI模型, ML模型, 波束, 参考信号, 测量报告, 测量结果, 第一网元, 定位, 更新, 候选, 接入网, 空口, 目标训练数据, 判定结果, 筛选, 收集, 条件, 位置, 无效, 选择, 训练, 训练数据, 样本, 性能要求, 数量, 有效, 约束条件, 指示, 质量, 准则, 门限, 阈值, 最大次数, CSI, LMF, PRS, RAN, RS, SINR, SRS, valid, AL model, position+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110475355 A (HUAWEI TECHNOLOGIES CO., LTD.) 19 November 2019 (2019-11-19) description, paragraphs 0189-0202 and 0236 | 1-14, 17-31, 34-42 |
| A | WO 2022011704 A1 (BEIJING XIAOMI MOBILE SOFTWARE CO., LTD.) 20 January 2022 (2022-01-20) entire document | 1-42 |
| A | WO 2020164405 A1 (HUAWEI TECHNOLOGIES CO., LTD.) 20 August 2020 (2020-08-20) entire document | 1-42 |
| A | CN 114788319 A (HUAWEI TECHNOLOGIES CO., LTD.) 22 July 2022 (2022-07-22) entire document | 1-42 |
| A | US 2022046386 A1 (QUALCOMM INCORPORATED) 10 February 2022 (2022-02-10) entire document | 1-42 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 November 2023** | **04 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/119343**

| Patent document cited in search report | | | Publication date (day/month/year) | Patent family member(s) | | | Publication date (day/month/year) |
|---|---|---|---|---|---|---|---|
| CN | 110475355 | A | 19 November 2019 | BR | 112020022873 | A2 | 23 March 2021 |
| | | | | WO | 2019214725 | A1 | 14 November 2019 |
| | | | | US | 2021067233 | A1 | 04 March 2021 |
| | | | | CA | 3100559 | A1 | 14 November 2019 |
| | | | | EP | 3787359 | A1 | 03 March 2021 |
| | | | | IN | 202047050412 | A | 04 December 2020 |
| | | | | RU | 2020140655 | A | 16 June 2022 |
| WO | 2022011704 | A1 | 20 January 2022 | US | 2023232266 | A1 | 20 July 2023 |
| | | | | EP | 4184956 | A1 | 24 May 2023 |
| WO | 2020164405 | A1 | 20 August 2020 | CN | 111586830 | A | 25 August 2020 |
| CN | 114788319 | A | 22 July 2022 | BR | 112022009858 | A2 | 02 August 2022 |
| | | | | EP | 4052496 | A1 | 07 September 2022 |
| | | | | US | 2022353155 | A1 | 03 November 2022 |
| | | | | JP | 2023503111 | A | 26 January 2023 |
| | | | | WO | 2021098159 | A1 | 27 May 2021 |
| | | | | US | 2021160149 | A1 | 27 May 2021 |
| | | | | IN | 202237035262 | A | 27 January 2023 |
| US | 2022046386 | A1 | 10 February 2022 | BR | 112023001262 | A2 | 14 February 2023 |
| | | | | JP | 2023537254 | A | 31 August 2023 |
| | | | | KR | 20230047368 | A | 07 April 2023 |
| | | | | EP | 4193171 | A1 | 14 June 2023 |
| | | | | WO | 2022031687 | A1 | 10 February 2022 |
| | | | | CN | 116113841 | A | 12 May 2023 |
| | | | | IN | 202247072693 | A | 06 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211203052X